# EUROPEAN PATENT SPECIFICATION

(11) **EP 3 245 100 B1**
(45) Date of publication and mention of the grant of the patent: **28.08.2019**
(21) Application number: 16707253.7
(22) Date of filing: 15.01.2016
(51) Int. Cl.: B60Q 1/00, B60Q 1/04, B60Q 1/18, B60Q 1/26, B60Q 1/38, B60Q 1/30, E01H 5/06, B60R 16/023, H01R 31/06, F21S 9/02

(54) **METHOD AND APPARATUS FOR INSTALLING AND OPERATING AN AUXILIARY LIGHTING SYSTEM USING A VEHICLE ELECTRIC PLUG**
VERFAHREN UND VORRICHTUNG FÜR INSTALLATION UND BETRIEB EINES HILFSBELEUCHTUNGSSYSTEMS MIT EINEM ELEKTRISCHEN FAHRZEUGSTECKER
PROCÉDÉ ET APPAREIL POUR L'INSTALLATION ET LE FONCTIONNEMENT D'UN SYSTÈME D'ÉCLAIRAGE AUXILIAIRE UTILISANT UNE FICHE ÉLECTRIQUE D'UN VÉHICULE

(30) Priority: 16.01.2015 US 201562104570 P; 13.02.2015 US 201514622211; 07.04.2015 US 201514680367; 27.07.2015 US 201514809390; 30.09.2015 US 201514871858
(43) Date of publication of application: 22.11.2017
(73) Proprietor: Meyer Products, LLC., Cleveland, Ohio 44112 (US)
(72) Inventor: ORAZEM, Louis, Chardon, Ohio 44024 (US)
(74) Representative: Patentwerk B.V.
(86) International application number: PCT/US2016/013731
(87) International publication number: WO 2016/115541

(56) References cited:
- EP-A1- 2 127 946
- DE-U1- 29 700 668
- US-A- 5 607 221
- US-A- 5 769 526
- US-A- 6 138 388
- US-A1- 2014 052 335
- US-B1- 6 322 238
- US-B1- 6 362 727
- US-B1- 7 400 058

## Description

### TECHNICAL FIELD

This invention relates to a method for installing and operating an auxiliary lighting system using a vehicle's electric plug.

### BACKGROUND

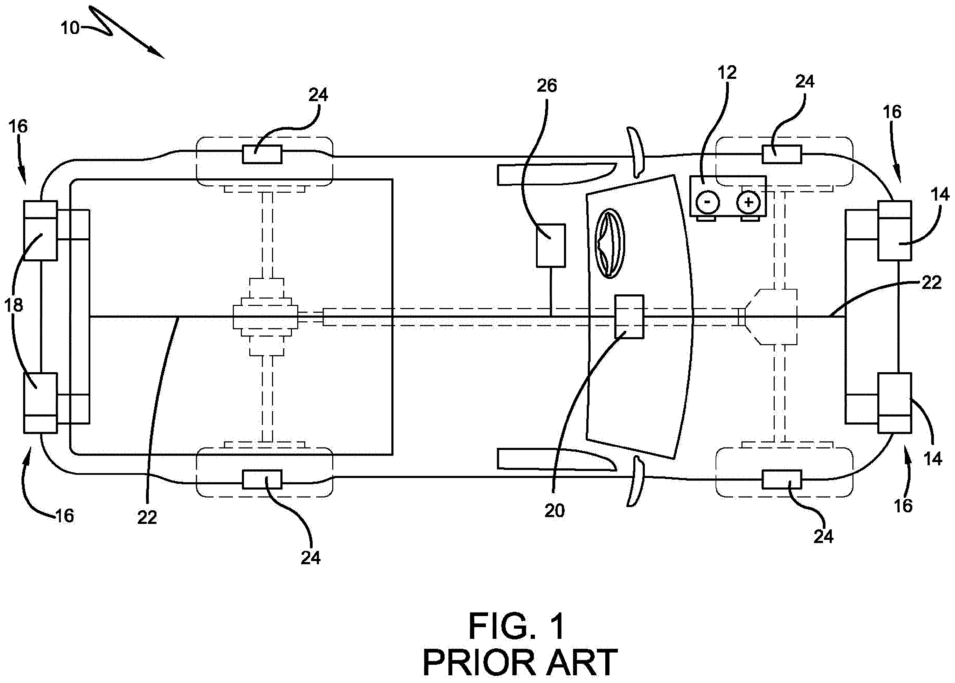

FIGURE 1 illustrates a known vehicle 10 in schematic representation showing numerous components including a battery 12 and exterior vehicle lights. The exterior vehicle lights include headlights 14 which illuminate a ground surface in front of the vehicle 10 upon which the vehicle 10 travels as is well known to those of skill in the art. The headlights 14 may include low and high beams. The exterior vehicle lights may also include one or more supplemental lights 16 which may be positioned at the front and the rear of the vehicle 10 and sometimes the sides of the vehicle as well. Numerous supplemental lights 16 are well known and include turn signal lights, park lights, running lights, and brake lights, though brake lights 18 typically are only provided at the rear of the vehicle 10, as shown. As is also known, sometimes the same light source, such as a light bulb or light emitting diode (LED), may serve more than one supplemental light purpose; such as a brake light and a turn signal light.

Still referring to FIGURE 1, an operator adjustable vehicle light control 20, typically positioned within the vehicle interior, can be adjusted by a user in order to control the exterior vehicle lights; such as to turn the exterior vehicle lights into ON and OFF conditions and/or adjust the intensity of illumination. Vehicle light wiring 22 is used to electrically connect the operator adjustable vehicle light control 22 to the vehicle headlights 14, and the supplemental lights 16. The vehicle 10 may include at least one brake 24, four shown at the four wheels, which are operable to slow down the vehicle's speed in a known manner. A braking device 26, such as a brake pedal, may be operated by the user to activate the brakes 24. In order to illuminate the brake lights 18, the braking device 26 may be electrically connected to the vehicle light wiring 22, as shown. As the basic operation of external vehicle lights is well known to those of skill in the art, further details will not be provided here.

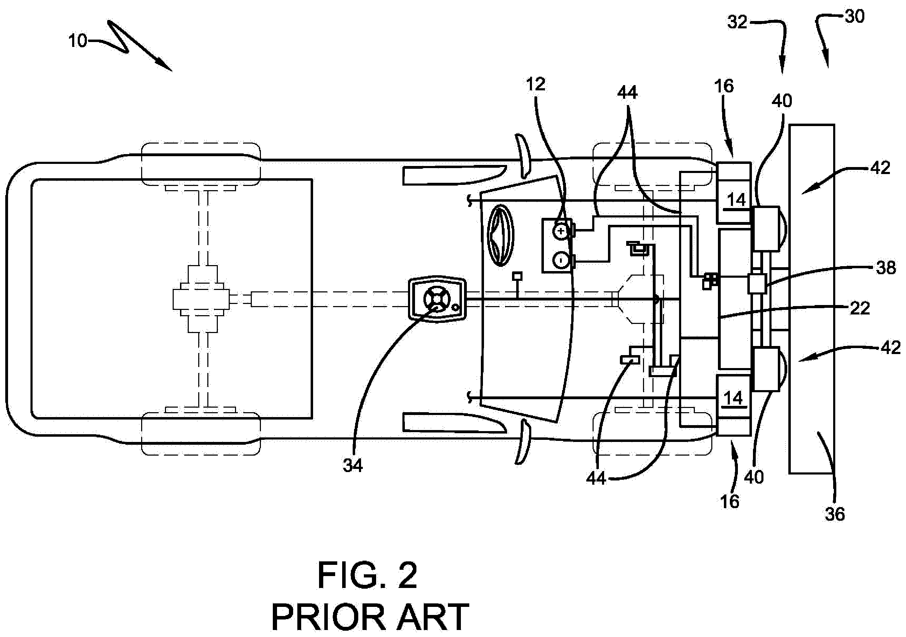

FIGURE 2 illustrates the vehicle 10 of FIGURE 1 but with an auxiliary implement 30, in the form of a snowplow, mounted onto the front of the vehicle 10. An operator adjustable auxiliary implement control 34 may be operated by the user to operate one or more functions of the auxiliary implement 30; such as to raise and lower a snowplow blade 36 by way of a hydraulic unit 38. The vehicle's headlights 14 and front positioned supplemental lights 16, however, are commonly obscured by the auxiliary implement 30. Therefore, an auxiliary lighting system 32, including auxiliary headlights 40 and auxiliary supplemental lights 42, are used in place of, or in addition to, the vehicle headlights 14 and supplemental lights 16. While known auxiliary lighting systems generally work well for their intended purposes, they are known to have problems.

One problem with known auxiliary lighting systems, with reference to FIGURES 1 and 2, is that numerous electrical connections must be made between the auxiliary wiring 44 and the vehicle light wiring 22 so that the auxiliary headlights 40 and auxiliary supplemental lights 42 can be coordinated, powered, and controlled by the vehicle's existing electrical system including the operator adjustable vehicle light control 20. Current installation techniques involve disconnecting the vehicle's original equipment manufacturer ("OEM") light wiring 22, often in the form of a harness, and splicing or otherwise connecting the new auxiliary wiring 44, also often in the form of a harness, to the OEM wiring 22 in order to provide auxiliary lighting. This part of the process is labor intensive and objectionable as it requires altering the vehicle's existing electrical system. For example, the time necessary to initially install and mount a snowplow that utilizes an auxiliary lighting system to a vehicle is approximately four hours. The process of installing the auxiliary wiring 44 consumes approximately two and one half hours of that time. Furthermore, given the complexity of the electrical interconnections required, an electrical technician should be used to assure that proper connections have been made.

Therefore, a simpler installation process would reduce the amount of time and effort necessary to install an auxiliary implement utilizing an auxiliary lighting system and would eliminate the need for major alterations to the vehicle's OEM electrical systems.

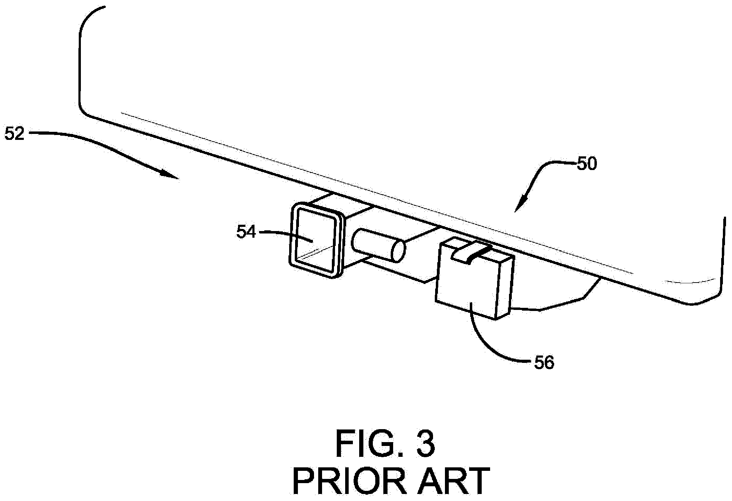

With reference now to FIGURE 3, many vehicles that are suited to operate an auxiliary implement, such as a snowplow or spreader, are trucks or other vehicles that include a trailer hitch 52 that includes a hitch receiver 54 and a trailer plug 50 that may be protected with a lid or cover 56. It is believed that approximately 95% of trucks currently manufactured feature trailer hitches. More recently, manufacturers offer trucks with towing packages, including a hitch receiver and a trailer plug, installed as standard equipment. Trucks that do not include these features as standard equipment from the manufacturer have the towing package available as an option from the factory. Vehicles other than trucks, such as cars and all-terrain vehicles (also known as "ATVs") may also offer such hitch receivers and/or trailer plugs and may also be candidates for embodiments of this invention. A hitch receiver 54, as is well known to those of skill in the art, is a tube adapted to receive a portion of a trailer or other device so that the trailer or other device can be physically attached to the vehicle.

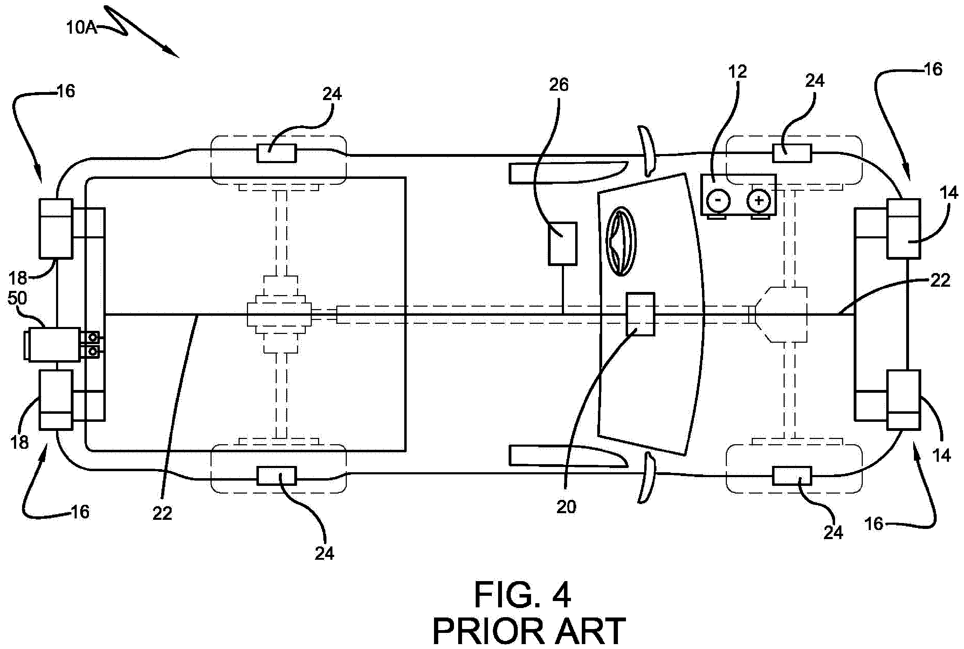

FIGURE 4 shows a vehicle 10A that is similar to vehicle 10 shown in FIGURES 1 and 2 except for the addition of trailer plug 50. A trailer plug, as is well known to those of skill in the art, is a type of electric plug. Each trailer plug 50 includes wiring that indicates the condition of the vehicle supplemental lights 16. Trailer plugs come in multiple varieties and are designed to power and control trailer features such as brake lights, turn signals, running lights, and the like. The two most common trailer plugs are the 7-way plug and the 4-way plug, which will be discussed further below. Many trucks now come with the 7-way plug installed from the factory, as discussed above. Other common plugs include a 6-way, a 5-way, and a 4-way plug. There are also a wide variety of European type trailer plugs with different wiring configurations than those just described. U.S. Patent No. 6,138,388 discloses a means of electrically connecting multiple components of a snowplow blade unit. The snowplow blade unit may include a frame mount assembly, lift assembly, and blade mount assembly, such that either, or both, of the lift and blade mount assemblies are selectively detachable to the frame mount assembly. The snowplow blade unit may thus be secured to the bottom of a vehicle for use. A lighting system, such as auxiliary lights, may further be coupled with the snowplow, and additionally may be controlled by a light controller. U.S. Patent No. 6,322,238 discusses an auxiliary light system which includes a rectangular tubular frame which may be used in conjunction with a vehicle having a conventional socket located thereon. An auxiliary implement, such as a trailer lighting system, may thereby be mounted to the backside of the vehicle. A series of electrical wiring may then supply the trailer lighting system, by way of power received from the conventional socket, with lighting capabilities. EP 2,127,946 discusses a trailer lighting system which may be connected to a towing vehicle, thereby providing lighting elements thereto. The trailer lighting system allows for the reduction in overall wiring associated with the trailer and towing vehicle by incorporating a controller which allows for the encoding of various lighting groups, thus allowing for all of said lighting groups to be run from a single power line.

### SUMMARY

An auxiliary apparatus according to the invention is defined in claim 1. A method according to the invention is defined in claim 8. An auxiliary lighting system according to the invention is defined in claim 12. According to some embodiments of this invention, an auxiliary apparatus may be used with an associated vehicle having a front, first and second sides, a back, and a trailer plug (202) positioned at the back of the associated vehicle, the auxiliary apparatus may comprise: an auxiliary implement (100) that is removably mountable to at least one of: the associated vehicle's front; and, at least one of the associated vehicle's sides; an auxiliary lighting system (114) for use with the auxiliary implement (100) including at least one auxiliary light (104); and, a controller (600) comprising a microprocessor (702). This may be characterized by:
a wire bundle (402) that: has a first end that is electrically hardwire connectable to the trailer plug (202); has a second end that is electrically hardwire connectable to at least one of the auxiliary lighting system (114) and the controller (600); and, transmits an electrical signal from the trailer plug (202) to the second end; and, wherein the controller (600): is electrically connectable to at least one of the wire bundle (402) and the auxiliary lighting system (114); and, the microprocessor (702) is programmed to operate the at least one auxiliary light (104) based directly or indirectly on the electrical signal.

According to some embodiments of this invention, an auxiliary lighting system (114) method for use with an associated vehicle having a front, first and second sides, a back, and a trailer plug (202) positioned at the back of the associated vehicle may comprise the steps of: (A) providing an auxiliary implement (100); (B) providing an auxiliary lighting system (114) for use with the auxiliary implement (100) that includes at least one auxiliary light (104); and, (C) providing a controller (600) comprising a microprocessor (702). This may be characterized by: (D) designing the auxiliary implement (100), a wire bundle (402), and the controller (600) to be operable according to the following steps: (1) mounting the auxiliary implement (100) to at least one of: (a) the associated vehicle's front; and, (b) at least one of the associated vehicle's sides; (2) mounting the auxiliary lighting system (114) to at least one of the associated vehicle and the auxiliary implement (100); (3) mounting the controller (600) to at least one of: (a) the associated vehicle's front; (b) at least one of the associated vehicle's sides; (c) the auxiliary implement (100); and, (d) the auxiliary lighting system (114); (4) electrically hardwire connecting a first end of the wire bundle (402) to the trailer plug (202); (5) electrically hardwire connecting a second end of the wire bundle (402) to at least one of the auxiliary lighting system (114) and the controller (600); (6) electrically connecting the controller (600) to at least one of the wire bundle (402) and the auxiliary lighting system (114); (7) transmitting an electrical signal from the trailer plug (202) through the wire bundle (402) to the second end the wire bundle (402); and, (8) using the controller (600) to operate the at least one auxiliary light (104) based directly or indirectly on the electrical signal.

According to some embodiments of this invention, an auxiliary lighting system (114) for use with: an associated vehicle having a front, first and second sides, a back, and a trailer plug (202) positioned at the back of the associated vehicle; and, an associated auxiliary snowplow assembly mountable to the associated vehicle and comprising a plow blade positioned substantially at the front of the associated vehicle may comprise: at least one auxiliary light (104); and, a controller (600) comprising a microprocessor (702). This may be characterized by: a wire bundle (402) that: has a first end that is electrically hardwire connectable to the trailer plug (202); has a second end that is electrically hardwire connectable to at least one of the auxiliary lighting system (114) and the controller (600); and, transmits an electrical signal from the trailer plug (202) to the second end; and, (C) wherein the controller (600): is electrically connectable to at least one of the wire bundle (402) and the auxiliary lighting system (114); and, the microprocessor (702) is programmed to operate the at least one auxiliary light (104) based directly or indirectly on the electrical signal.

According to embodiments of this invention, an auxiliary lighting system for use with an associated vehicle having a trailer plug may comprise: A) an auxiliary implement having an auxiliary lighting system including at least one auxiliary light wherein the auxiliary implement is removably mounted to at least one of: (1) the associated vehicle's front; and, (2) at least one of the associated vehicle's sides; and wherein the associated vehicle has a trailer plug; and, B) a wire bundle secured to the vehicle and in electrical connection with the trailer plug and the auxiliary lighting system; wherein the wire bundle can transmit an electrical signal from the trailer plug to the auxiliary lighting system to operate the auxiliary lighting system.

According to embodiments of this invention, an auxiliary lighting system for use with an associated vehicle having a trailer plug may comprise: A) an auxiliary implement having an auxiliary lighting system including at least one auxiliary light; at least one turn signal; wherein the auxiliary implement is removably mounted to at least one of: (1) the associated vehicle's front; and, (2) at least one of the associated vehicle's sides; and wherein the associated vehicle has a braking system including a brake pedal and brake lights and a trailer plug; and, B) a wire bundle secured to the vehicle and in electrical connection with the trailer plug and the auxiliary lighting system; wherein the wire bundle can transmit an electrical signal from the trailer plug to the auxiliary lighting system to operate the auxiliary lighting system. The wire bundle may be electrically connected to the auxiliary lighting system in a manner sufficient to illuminate the at least one turn signal when the brake pedal of the associated vehicle is depressed.

According to embodiments of this invention, a wire bundle for use with an associated auxiliary lighting system, the auxiliary lighting system adapted for use with an associated vehicle having a trailer plug. The auxiliary lighting system may comprise an auxiliary implement having an auxiliary lighting system including at least one auxiliary light; at least one turn signal; wherein the auxiliary implement is removably mounted to at least one of: (1) the associated vehicle's front; and, (2) at least one of the associated vehicle's sides; and wherein the associated vehicle has a braking system including a brake pedal and brake lights and a trailer plug. The wire bundle may comprise: a wire bundle secured to the vehicle and in electrical connection with the trailer plug and the auxiliary lighting system; wherein the wire bundle can transmit an electrical signal from the trailer plug to the auxiliary lighting system to operate the auxiliary lighting system.

According to embodiments of this invention, an auxiliary lighting system for use with an associated vehicle having a trailer plug may comprise: A) an auxiliary implement having an auxiliary lighting system including at least one auxiliary light, wherein the auxiliary implement is removably mounted to at least one of: (1) the associated vehicle's front; and, (2) at least one of the associated vehicle's sides; B) a wire bundle secured to the vehicle and in electrical connection with the trailer plug and the auxiliary lighting system; wherein the wire bundle can transmit an electrical signal from the trailer plug; and, C) a controller comprising a microprocessor programmed to operate the at least one auxiliary light based directly or indirectly on the electrical signal.

According to embodiments of this invention, an auxiliary apparatus for use with an associated vehicle having a front, first and second sides, a back, and a trailer plug positioned at the back of the associated vehicle may comprise: (A) an auxiliary implement that is removably mountable to at least one of: (1) the associated vehicle's front; and, (2) at least one of the associated vehicle's sides; (B) an auxiliary lighting system for use with the auxiliary implement including at least one auxiliary light; (C) a wire bundle that: (1) has a first end that is electrically hardwire connectable to the trailer plug; (2) has a second end that is electrically hardwire connectable to at least one of the auxiliary lighting system and a controller; and, (3) transmits an electrical signal from the trailer plug to the second end; and, (D) wherein the controller: (1) is electrically connectable to at least one of the wire bundle and the auxiliary lighting system; and, (2) comprises a microprocessor programmed to operate the at least one auxiliary light based directly or indirectly on the electrical signal.

According to embodiments of this invention, An auxiliary lighting system method for use with an associated vehicle having a front, first and second sides, a back, and a trailer plug positioned at the back of the associated vehicle may comprise the steps of: (A) providing an auxiliary implement; (B) providing an auxiliary lighting system for use with the auxiliary implement that includes at least one auxiliary light; (C) providing a wire bundle; (D) providing a controller comprising a microprocessor; and, (E) designing the auxiliary implement, the wire bundle and the controller to be operable according to the following steps: (1) mounting the auxiliary implement to at least one of: (a) the associated vehicle's front; and, (b) at least one of the associated vehicle's sides; (2) mounting the auxiliary lighting system to at least one of the associated vehicle and the auxiliary implement; (3) mounting the controller to at least one of: (a) the associated vehicle's front; (b) at least one of the associated vehicle's sides; (c) the auxiliary implement; and, (d) the auxiliary lighting system; (4) electrically hardwire connecting a first end of the wire bundle to the trailer plug; (5) electrically hardwire connecting a second end of the wire bundle to at least one of the auxiliary lighting system and the controller; (6) electrically connecting the controller to at least one of the wire bundle and the auxiliary lighting system; (7) transmitting an electrical signal from the trailer plug through the wire bundle to the second end the wire bundle; and, (8) using the controller to operate the at least one auxiliary light based directly or indirectly on the electrical signal.

According to embodiments of this invention, an auxiliary lighting system for use with: (1) an associated vehicle having a front, first and second sides, a back, and a trailer plug positioned at the back of the associated vehicle; and, (2) an associated auxiliary snowplow assembly mountable to the associated vehicle and comprising a plow blade positioned substantially at the front of the associated vehicle may comprise: (A) at least one auxiliary light; (B) a wire bundle that: (1) has a first end that is electrically hardwire connectable to the trailer plug; (2) has a second end that is electrically hardwire connectable to at least one of the auxiliary lighting system and a controller; and, (3) transmits an electrical signal from the trailer plug to the second end; and, (C) wherein the controller: (1) is electrically connectable to at least one of the wire bundle and the auxiliary lighting system; and, (2) comprises a microprocessor programmed to operate the at least one auxiliary light based directly or indirectly on the electrical signal.

According to embodiments of this invention, an auxiliary apparatus for use with an associated vehicle having: at least one vehicle light that is at least one of a headlight and a tail light; an operator adjustable light control that permits a user to control the vehicle light, a battery; and, an electric plug that is electrically connected to the vehicle light may comprise: an auxiliary snow and/or ice removal implement that is removably mountable to the associated vehicle; an auxiliary lighting system that: (1) is designed for use with the auxiliary implement; and, (2) has at least one auxiliary light designed to illuminate a ground surface upon which the associated vehicle travels; a user operable device that is designed to operate at least one function of the auxiliary snow and/or ice removal implement; a first wiring harness that: (1) has a first electrical connector that is a power connector; (2) has a second electrical connector that is electrically connectable to the at least one auxiliary light; (3) has a third electrical connector that is electrically hardwire connectable to the auxiliary implement; and, (4) has a fourth electrical connector; a second wiring harness that: (1) has a first end that is electrically connectable to the vehicle battery; (2) has a second end with a power connector that is electrically hardwire connectable to the power connector of the first wiring harness; and, (3) is designed to transmit power from the vehicle battery to the power connector of the first wiring harness to power the auxiliary snow and/or ice removal implement; a third wiring harness that: (1) has a first connector that is electrically hardwire connectable to the vehicle electric plug; (2) has a second connector that is electrically hardwire connectable to the fourth electrical connector of the first wiring harness; (3) has a third connector that is designed to be connected to the user operable device; and, (4) is designed to transmit an electrical signal from the vehicle electric plug to the first wiring harness; and, wherein when the first, second, and third wiring harnesses are connected: (1) the user operable device is operable to operate the at least one function of the auxiliary snow and/or ice removal implement; and, (2) the operator adjustable light control is operable to control the at least one auxiliary light.

According to embodiments of this invention, a method for use with an associated vehicle having: at least one vehicle light that is at least one of a headlight and a tail light; an operator adjustable light control that permits a user to control the vehicle light, a battery; and, an electric plug that is electrically connected to the vehicle light may comprise the steps of: (A) providing an auxiliary apparatus comprising: an auxiliary snow and/or ice removal implement comprising at least one operable function; an auxiliary lighting system that: (1) is designed for use with the auxiliary implement; and, (2) has at least one auxiliary light designed to illuminate a ground surface upon which the associated vehicle travels; a user operable device that is designed to operate the at least one operable function of the auxiliary snow and/or ice removal implement; a first wiring harness that: (1) has a first electrical connector that is a power connector; (2) has a second electrical connector that is electrically connectable; (3) has a third electrical connector that is electrically hardwire connectable; and, (4) has a fourth electrical connector; a second wiring harness that: (1) has a first end; and, (2) has a second end with a power connector that is electrically hardwire connectable; a third wiring harness that: (1) has a first connector that is electrically hardwire connectable; (2) has a second connector that is electrically hardwire connectable; and, (3) has a third connector; wherein the auxiliary apparatus is operable according to the following steps: (B) mounting the auxiliary snow and/or ice removal implement to the associated vehicle; (C) mounting the auxiliary lighting system to at least one of: (1) the auxiliary snow and/or ice removal implement; and, (2) the associated vehicle; (D) securing the first, second, and third wiring harnesses to at least one of: (1) the auxiliary snow and/or ice removal implement; and, (2) the associated vehicle; (E) electrically connecting the second electrical connector of the first wiring harness to the at least one auxiliary light; (F) electrically hardwire connecting the third electrical connector of the first wiring harness to the auxiliary implement; (G) electrically connecting the first end of the second wiring harness to the vehicle battery; (H) electrically hardwire connecting the power connector of the second wiring harness to the power connector of the first wiring harness to enable power to be transmitted from the vehicle battery to the auxiliary snow and/or ice removal implement; (I) electrically hardwire connecting the first connector of the third wiring harness to the vehicle electric plug; (J) electrically hardwire connecting the second connector of the third wiring harness to the fourth electrical connector of the first wiring harness; (K) electrically hardwire connecting the third connector of the third wiring harness to the user operable device to enable an electric signal to be transmitted from the vehicle electric plug to the first wiring harness; (L) manually operating the user operable device to operate the at least one function of the auxiliary snow and/or ice removal implement; and, (M) manually operating the operator adjustable light control to control the at least one auxiliary light.

According to embodiments of this invention, an apparatus may comprise: a vehicle comprising: at least one vehicle light that is at least one of a headlight and a tail light; an operator adjustable light control that permits a user to control the vehicle light, a battery; and, an electric plug that is electrically connected to the vehicle light; an auxiliary snow and/or ice removal implement that is removably mountable to the vehicle; an auxiliary lighting system that: (1) is designed for use with the auxiliary implement; and, (2) has at least one auxiliary light designed to illuminate a ground surface upon which the vehicle travels; a user operable device that is designed to operate at least one function of the auxiliary snow and/or ice removal implement; a first wiring harness that: (1) has a first electrical connector that is a power connector; (2) has a second electrical connector that is electrically connected to the at least one auxiliary light; (3) has a third electrical connector that is electrically hardwire connected to the auxiliary implement; and, (4) has a fourth electrical connector; a second wiring harness that: (1) has a first end that is electrically connected to the vehicle battery; (2) has a second end with a power connector that is electrically hardwire connected to the power connector of the first wiring harness; and, (3) transmits power from the vehicle battery to the auxiliary snow and/or ice removal implement; a third wiring harness that: (1) has a first connector that is electrically hardwire connected to the vehicle electric plug; (2) has a second connector that is electrically hardwire connected to the fourth electrical connector of the first wiring harness; (3) has a third connector that is connected to the user operable device; and, (4) transmits an electrical signal from the vehicle electric plug to the first wiring harness; wherein the user operable device is operable to operate the at least one function of the auxiliary snow and/or ice removal implement; and, wherein the operator adjustable light control is operable to control the at least one auxiliary light.

According to embodiments of this invention, an auxiliary apparatus may be used with an associated vehicle having: exterior vehicle lights that include at least one vehicle headlight that illuminates a ground surface in front of the associated vehicle upon which the associated vehicle travels and at least one vehicle supplemental light that is at least one of a turn signal light and a park light; an operator adjustable vehicle light control with which a user can control the exterior vehicle lights; a power source; and, a vehicle electric plug that indicates the condition of the vehicle supplemental light. The auxiliary apparatus may comprise: an auxiliary implement that: (1) comprises an operator adjustable auxiliary implement control; and, (2) is removably mountable to the associated vehicle; an auxiliary lighting system that: (1) is designed for use with the auxiliary implement; (2) comprises at least one auxiliary headlight designed to illuminate the ground surface upon which the associated vehicle travels in place of the vehicle headlight; (3) comprises at least one auxiliary supplemental light that is at least one of a turn signal light and a park light; and, (4) comprises an operator adjustable auxiliary light control; auxiliary wiring that is designed to: (1) electrically hardwire connect the power source to: the auxiliary implement; and, the auxiliary lighting system; (2) transfer power from the power source to: the auxiliary implement; and, the auxiliary lighting system; (3) electrically hardwire connect the vehicle electric plug to the auxiliary lighting system; and, (4) transmit an electrical signal from the vehicle electric plug to the auxiliary lighting system. When the auxiliary wiring is properly connected: (1) the operator adjustable auxiliary implement control is operable to operate at least one function of the auxiliary implement; (2) the operator adjustable auxiliary light control is operable to operate the at least one auxiliary headlight; and, (3) the operator adjustable vehicle light control is operable to operate the at least one auxiliary supplemental light

According to embodiments of this invention, a method of using an auxiliary lighting system with an associated vehicle may be used. The associated vehicle may include: exterior vehicle lights that include at least one vehicle headlight that illuminates a ground surface in front of the associated vehicle upon which the associated vehicle travels and at least one vehicle supplemental light that is at least one of a turn signal light and a park light; an operator adjustable vehicle light control with which a user can control the exterior vehicle lights; a power source; and, a vehicle electric plug that indicates the condition of the vehicle supplemental light. The method may comprise the steps of: (A) providing an auxiliary implement comprising an operator adjustable auxiliary implement control; (B) providing an auxiliary lighting system that: (1) is designed for use with the auxiliary implement; (2) comprises at least one auxiliary headlight; (3) comprises at least one auxiliary supplemental light that is at least one of a turn signal light and a park light; and, (4) comprises an operator adjustable auxiliary light control; (C) providing auxiliary wiring; (D) designing the auxiliary implement, the auxiliary lighting system, and the auxiliary wiring to be operable according to the following steps: (1) mounting the auxiliary implement to the associated vehicle; (2) mounting the auxiliary lighting system to at least one of the associated vehicle and the auxiliary implement; (3) electrically hardwire connecting the auxiliary wiring to electrically hardwire connect the power source to: the auxiliary implement and the auxiliary lighting system; (4) electrically hardwire connecting the auxiliary wiring to electrically hardwire connect the vehicle electric plug to the auxiliary lighting system; (5) transferring power from the power source to: the auxiliary implement and the auxiliary lighting system; (6) transmitting an electrical signal from the vehicle electric plug to the auxiliary lighting system; (7) using the operator adjustable vehicle light control to operate the at least one auxiliary supplemental light based directly or indirectly on the electrical signal; (8) using the operator adjustable auxiliary light control to operate the at least one auxiliary headlight to illuminate the ground surface upon which the associated vehicle travels in place of the vehicle headlight; and, (9) using the operator adjustable auxiliary implement control to operate at least one function of the auxiliary implement.

According embodiments of this invention, An apparatus may comprise: a vehicle comprising: (1) exterior vehicle lights that include at least one vehicle headlight that illuminates a ground surface in front of the vehicle upon which the vehicle travels; and, at least one vehicle supplemental light that is at least one of a turn signal light and a park light; (2) an operator adjustable vehicle light control with which a user can control the exterior vehicle lights; (3) a power source; and, (4) a vehicle electric plug that indicates the condition of the vehicle supplemental light; an auxiliary implement that: (1) comprises an operator adjustable auxiliary implement control; and, (2) is removably mountable to the vehicle; an auxiliary lighting system that: (1) is designed for use with the auxiliary implement; (2) comprises at least one auxiliary headlight designed to illuminate the ground surface upon which the vehicle travels in place of the vehicle headlight; (3) comprises at least one auxiliary supplemental light that is at least one of a turn signal light and a park light; and, (4) comprises an operator adjustable auxiliary light control; and, auxiliary wiring that is designed to: (1) electrically hardwire connect the power source to: the auxiliary implement; and, the auxiliary lighting system; (2) transfer power from the power source to: the auxiliary implement; and, the auxiliary lighting system; (3) electrically hardwire connect the vehicle electric plug to the auxiliary lighting system; and, (4) transmit an electrical signal from the vehicle electric plug to the auxiliary lighting system. When the auxiliary wiring is properly connected: (1) the operator adjustable auxiliary implement control is operable to operate at least one function of the auxiliary implement; (2) the operator adjustable auxiliary light control is operable to operate the at least one auxiliary headlight; and, (3) the operator adjustable vehicle light control is operable to operate the at least one auxiliary supplemental light.

Numerous benefits and advantages of this invention will become apparent to those skilled in the art to which it pertains upon reading and understanding of the following detailed specification.

### DESCRIPTION OF THE DRAWINGS

The invention may take physical form in certain parts and arrangement of parts, embodiments of which will be described in detail in this specification and illustrated in the accompanying drawings which form a part hereof and wherein:
FIGURE 1 is a top view of a known vehicle in schematic representation.
FIGURE 2 is a top view of a known vehicle in schematic representation showing the complexity of known wiring systems required to install a snowplow.
FIGURE 3 is a back perspective view of a known vehicle showing the trailer hitch including a trailer plug.
FIGURE 4 is a top view of a known vehicle in schematic representation.
FIGURE 5 a side view of a vehicle with a snowplow implement and a vehicle electric plug.
FIGURE 6 is a top view of a vehicle in schematic representation showing embodiments of this invention.
FIGURE 7 is a front perspective view of a snowplow implement.
FIGURE 8 is a back perspective view of a vehicle with a salt spreader attached thereto.
FIGURE 9 is a top view of a vehicle in schematic representation showing embodiments of vehicle electric plug locations.
FIGURE 10A is a close-up, end view of a 7-way plug.
FIGURE 10B is a close-up, end view of a 6-way plug.
FIGURE 10C is a close-up, end view of a 5-way plug.
FIGURE 10D is a close-up, perspective view of a 4-way plug.
FIGURE 11A is a perspective view of an electrical connector plug according to some embodiments of this invention.
FIGURE 11B is a perspective view of an electrical connector plug according to other embodiments of this invention.
FIGURE 12 is perspective view of one embodiment of an adapter.
FIGURE 13 is a schematic representation of a wiring harness according to some embodiments of this invention.
FIGURE 14 is a schematic representation of a wiring harness according to some embodiments of this invention.
FIGURE 15 is a schematic representation of a wiring harness according to some embodiments of this invention.
FIGURE 16 is a top view of a control housing according to some embodiments of this invention.
FIGURE 17 is a top perspective view of a portion of the controller shown in FIGURE 16.
FIGURE 18 is a view of the control housing shown in FIGURE 16 but also showing an electrical connector.
FIGURE 19 is a perspective view of a plow frame with a controller.
FIGURE 20 is a perspective view of an embodiment of a vehicle chassis with the vehicle body removed.
FIGURE 21 is a detailed view of a portion of a vehicle chassis.
FIGURE 22 illustrates a portion of a conduit that may be used to support auxiliary wiring according to some embodiments of this invention.
FIGURE 23 is a perspective view of the rear of a vehicle, showing a transponder connected to a vehicle electric plug.

### DETAILED DESCRIPTION

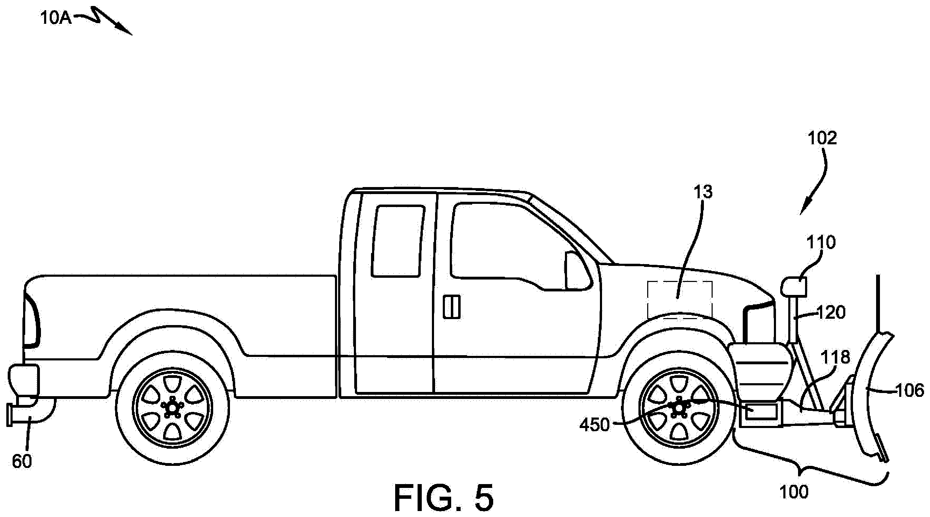

With reference now to FIGURES 5-7, vehicle 10A (or any other vehicle equipped with the appropriate electric plug and chosen by a person of skill in the art) may be equipped with an auxiliary implement 100 and an auxiliary lighting system 102, according to some embodiments of this invention. The auxiliary implement 100 may be removably mountable to the vehicle 10A and may include an operator adjustable auxiliary implement control 104 that is operable to operate at least one function of the auxiliary implement 100. The particular auxiliary implement, and thus the particular function that is operated, can be any chosen with the sound judgment of a person of skill in the art. In some embodiments, the auxiliary implement may be a snow and/or ice removal implement; such as a snowplow assembly or a spreader assembly. For the embodiment shown in FIGURES 5-7, the auxiliary implement 100 is a snowplow assembly including a snowplow blade 106 which may be position adjusted using a hydraulic unit 108. The snowplow assembly may further comprise a plow frame 118, a lift frame 120, a lift cylinder 122 and all other parts associated with the snowplow assembly as is well known to those of skill in the art. The operator adjustable auxiliary implement control 104 may be operated, for example, to raise and/or lower and/or laterally position the snowplow blade 106 using the hydraulic unit 108.

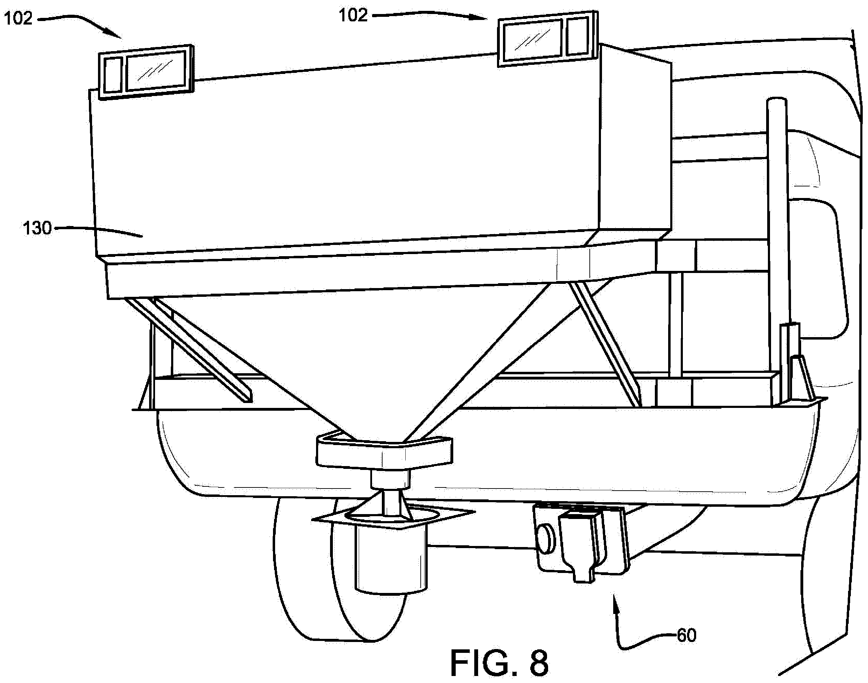

FIGURE 8 shows another snow and/or ice removal implement in the form of a salt spreader 130 that may be mountable to a vehicle. The spreader 130 may include an auxiliary lighting system 102 that is operated using a signal from a vehicle electric plug 60 as will be discussed further below. Non-limiting examples of other snow and/or ice removal auxiliary implements that may be used with this invention include power brooms, sweepers, and the like. As the operation of auxiliary implements are known to those of skill in the art, further details will not be provided here.

With reference now to FIGURES 5-7, the auxiliary lighting system 102 may be designed for use with the auxiliary implement 100 and may include at least one auxiliary headlight 110 designed to illuminate the ground surface upon which the vehicle travels in place of the vehicle headlight 14 and at least one auxiliary supplemental light 112, such as a turn signal light, a park light, or any other supplemental light chosen with the sound judgment of a person of skill in the art. An operator adjustable auxiliary light control 116 may be operable to operate the auxiliary headlight 110 as will be discussed further below.

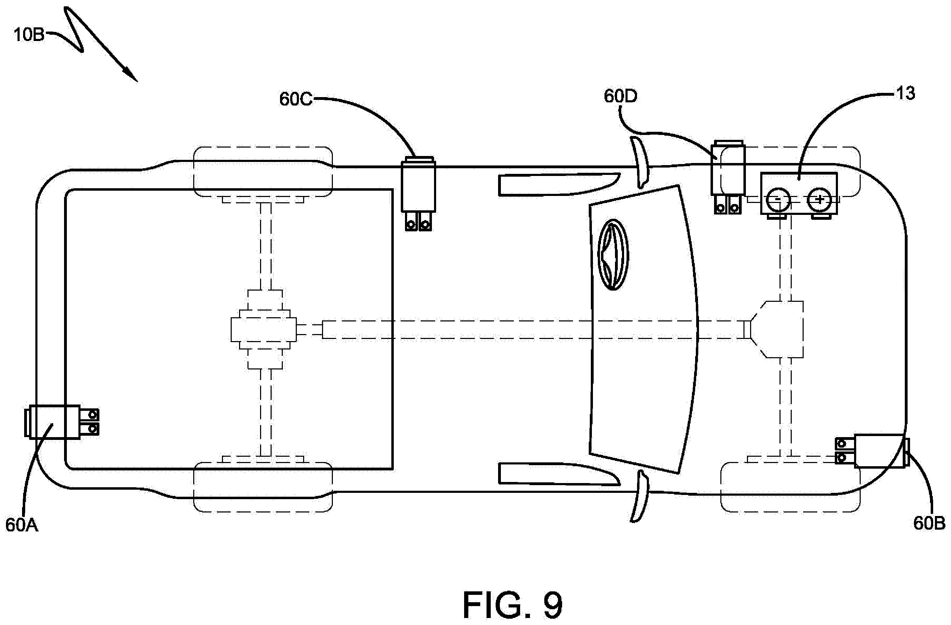

With reference now to FIGURES 3-6 and 8-9, a trailer plug, as is well known to those of skill in the art, is an electrical connector plug that indicates the condition of one or more of the vehicle supplemental lights 16 and that is positioned on the rear end of the vehicle 10A. An electrical connector is any type of electrical apparatus that enables one or more electrical wires, cables, harnesses, or devices to be electrically connected. An electric plug is an electrical connector that comprises one or more male extensions and/or female sockets that engage with corresponding female sockets and/or male extensions in one or more corresponding electric plugs to complete an electric connection. While this invention is designed to work with a vehicle's trailer plug, it should be noted that embodiments not according to invention will work with any electrical connector, an electric plug or otherwise, that indicates the condition of one or more of the vehicle supplemental lights. FIGURE 9 is a schematic representation of a vehicle 10B which may be similar to vehicle 10A described above. Reference 60 again indicates a vehicle electric plug that indicates the condition of one or more of the vehicle supplemental lights and the corresponding letter indicates the various possible locations for the vehicle electric plug 60. Thus, the vehicle electric plug 60 may be positioned at the rear of the vehicle, as is typically known and thus referred to as a "trailer plug," as is shown with reference 60A. Alternatively, or in addition, a vehicle electric plug may be positioned at the front of the vehicle as shown with reference 60B. Yet other alternative or additional embodiments include positioning a vehicle electric plug at the side of the vehicle as shown with reference 60C and/or near a power source 13 as shown with reference 60D. The power source 13 may be any power source chosen with the sound judgment of a person of skill in the art to provide appropriate power used as will be discussed further below. Non-limiting examples of power sources 13 that may be used with embodiments of this invention include a vehicle battery, a fuel cell, an electric motor, a hydraulic motor, a pneumatic motor and an internal combustion engine. It should be understood that the location of the electrical connector such as an electric plug when used with this invention can be any location chosen with the sound judgment of a person of skill in the art.

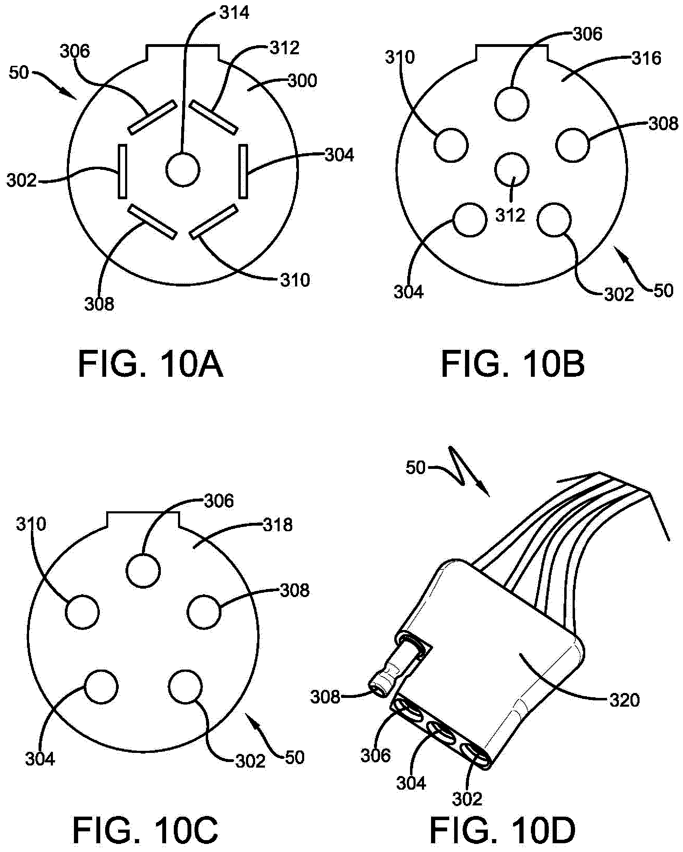

With reference now to FIGURES 10A-10D, as noted above, there are several types of known trailer plugs 50. FIGURE 10A illustrates a 7-way trailer plug; FIGURE 10B illustrates a 6-way trailer plug; FIGURE 10C illustrates a 5-way trailer plug; and, FIGURE 10D illustrates a 4-way trailer plug. Each trailer plug 50 may be factory installed on the vehicle or installed by an aftermarket or third party installer, without limitation. The trailer plug 50 may include a lid or cover 56, as shown in FIGURES 3 and 8, but a cover is not required for this invention. FIGURE 10A illustrates a standard 7-way plug 300 that includes seven electrical connections with each of these connections designed to provide power and/or control over some portion(s) of a trailer (not shown). One known set of connections are: (1) for a left turn signal 302 (also used for braking); (2) for a right turn signal 304 (also used for braking); (3) for tail lights 306 (also for marker lights); (4) a ground wire 308; (5) for trailer power brakes 310; (6) an auxiliary power connection 312; and, (7) for reverse lights 314. FIGURE 10B illustrates a 6-way plug 316 with these six connections: (1) for a left turn signal 302 (also used for braking); (2) for a right turn signal 304 (also used for braking); (3) for tail lights 306 (also for marker lights); (4) a ground wire 308; (5) for trailer power brakes 310; and, (6) an auxiliary power connection 312. FIGURE 10C illustrates a 5-way plug 318 with these five connections: (1) for a left turn signal 302 (also used for braking); (2) for a right turn signal 304 (also used for braking); (3) for tail lights 306 (also for marker lights); (4) a ground wire 308; and, (5) for trailer power brakes 310. FIGURE 10D illustrates a 4-way plug 320 with these four connections: (1) for a left turn signal 302 (also used for braking); (2) for a right turn signal 304 (also used for braking); (3) for tail lights 306 (also for marker lights); and, (4) a ground wire 308. It should be understood that the trailer plugs 50 just described are exemplary only as many variations are possible. While trailer plugs ordinarily come with hitch receivers, it should be understood that a hitch receiver is not required for this invention.

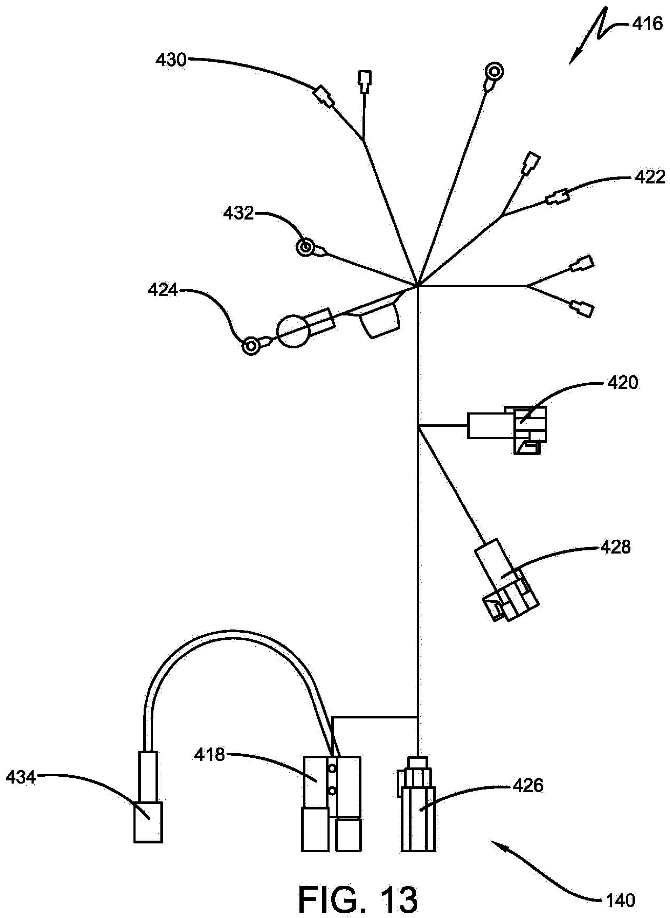

With reference now to FIGURES 5-7, 9, and 11-13, according to some embodiments of this invention auxiliary wiring 140 may be used for one or more purposes. The auxiliary wiring 140 may be designed in some embodiments to: (1) electrically connect the power source 13 to: the auxiliary implement 100; and/or the auxiliary lighting system 102; (2) transfer power from the power source 13 to: the auxiliary implement 100; and/or the auxiliary lighting system 102; (3) electrically connect the vehicle electric plug 50, 60 to the auxiliary lighting system 102; and, (4) transmit an electrical signal from the vehicle electric plug 50, 60 to the auxiliary lighting system 102. When the auxiliary wiring 140 is properly connected in some embodiments: (1) the operator adjustable auxiliary implement control 104 may be operable to operate at least one function of the auxiliary implement 100; (2) the operator adjustable auxiliary light control 116 may be operable to operate the auxiliary headlights 110; and, (3) the operator adjustable vehicle light control 20 may be operable to operate the auxiliary supplemental lights 112.

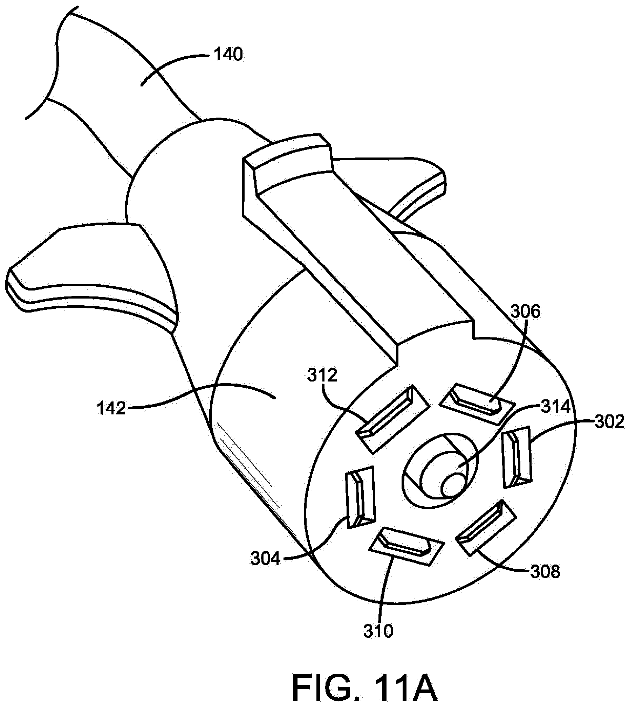

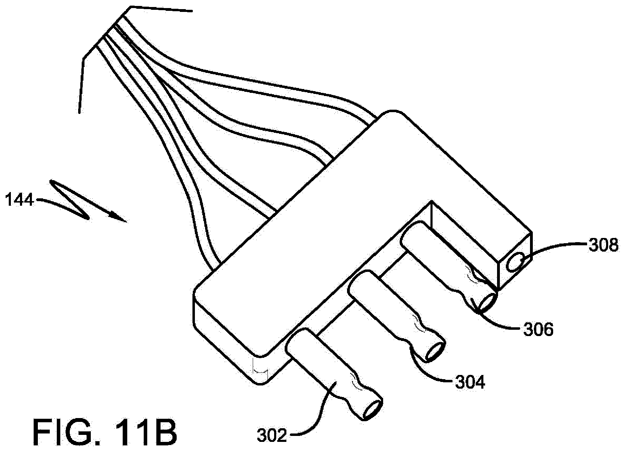

To connect the auxiliary wiring 140 to the vehicle electric plug 60, the auxiliary wiring 140 may have an electrical connector plug that is suitable to electrically connect to (plug into) the particular vehicle electric plug 60. FIGURE 11A shows one embodiment electrical connector plug 142 that is suitable to plug into the 7-way vehicle electric plug 300 shown in FIGURE 10A. The same reference numbers are used in FIGURE 11A as in FIGURE 10A to indicate the correlating interconnections. Thus, for example, the electrical connector plug 142 connections are: (1) 302 to match or connect to connection 302 of the vehicle plug 300; (2) 304 to match or connect to connection 304 of the vehicle plug 300; (3) 306 to match or connect to connection 306 of the vehicle plug 300; (4) 308 to match or connect to connection 308 of the vehicle plug 300; (5) 310 to match or connect to connection 310 of the vehicle plug 300; (6) 312 to match or connect to connection 312 of the vehicle plug 300; and, (7) 314 to match or connect to connection 314 of the vehicle plug 300. Similarly, in other embodiments, the electrical connector plug can be formed to electrically connect to (plug into): vehicle plug 316 in FIGURE 10B; electrical connector plug 318 in FIGURE 10C; and, electrical connector plug 320 in FIGURE 10D. FIGURE 11B, for example, shows a electrical connector plug 144 that is formed to electrically connect to (plug into) vehicle plug 320 shown in FIGURE 10D. The electrical connector plug can be formed to electrically connect to (plug into) any vehicle plug chosen with the sound judgment of a person of skill in the art.

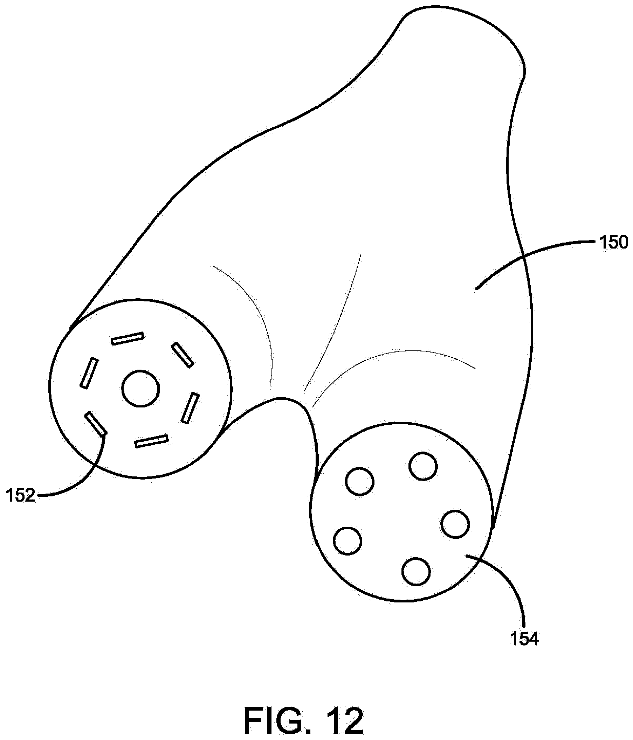

With reference to FIGURE 12, an adapter 150 can be used between the vehicle electric plug 60 and the auxiliary wiring electrical connector plug. The adapter 150 can split the connections from the vehicle electric plug 60 into a first outlet 152 and a second outlet 154. The first and second outlets 152, 154 can be configured to allow connections for any of the various plug types. By way of a non-limiting example, the first outlet 152 can be a 7-way plug and the second outlet 154 can be a 5-way plug, as shown. The combinations can be chosen by a person of ordinary skill in the art and can be tailored for specific needs given the desired usage. The adapter 150 can allow a person to connect the present invention while leaving an additional connection available for use with a trailer or second implement. According to other embodiments, the adapter 150 can have more than two outlets.

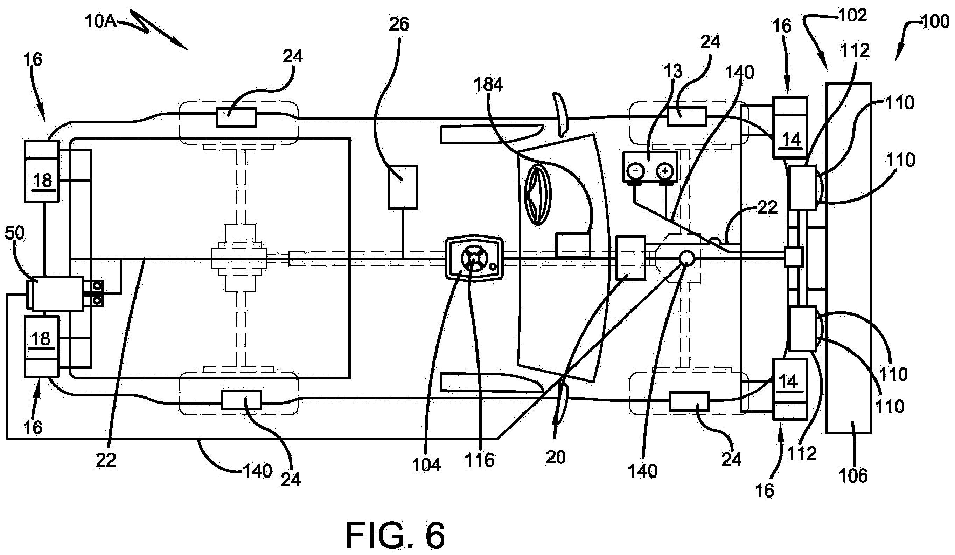

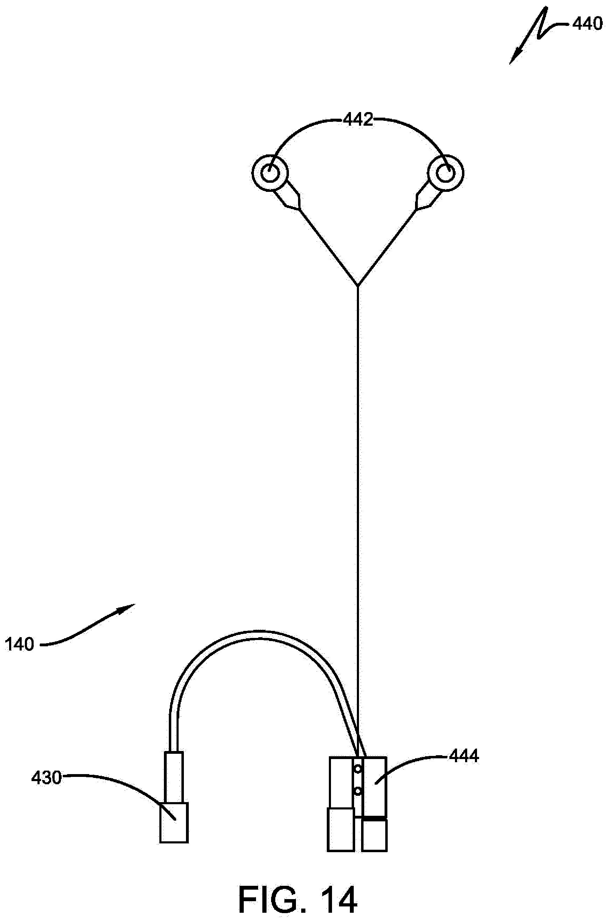

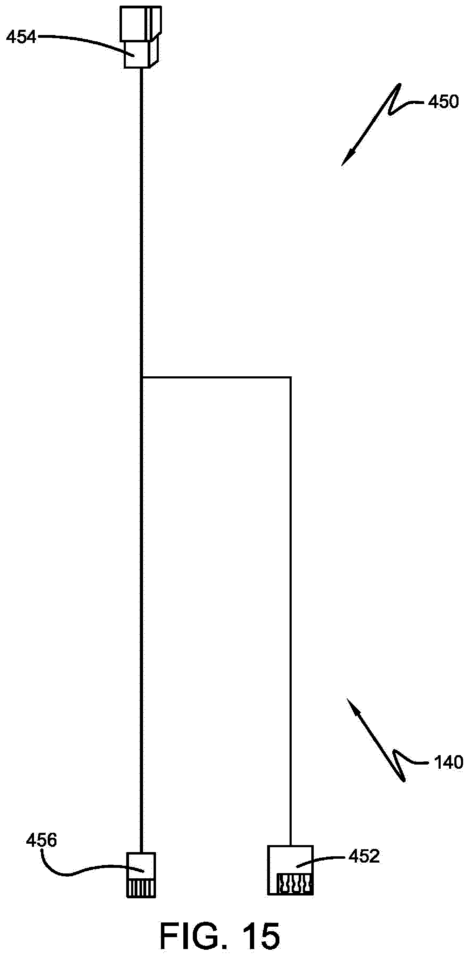

With reference now to FIGURES 6, 11A, 11B and 13-15, the auxiliary wiring 140 may include one or more wiring harnesses. In one embodiment, the auxiliary wiring 140 includes three wiring harnesses as will now be described.

With reference now to FIGURES 5-7 and 13, the auxiliary wiring 140 may include a first wiring harness 416. Wiring harness 416 may include: a first electrical connector 418 that may be a power connector; a second electrical connector 420 that may be electrically connectable to at least one auxiliary headlight 110; a third electrical connector 422 that may be electrically connectable to at least one auxiliary supplemental light 112; a fourth electrical connector 424 that is electrically connectable to the auxiliary implement 100; and, a fifth electrical connector 426. It should be noted, however, that additional electrical connectors may also be part of the first wiring harness 416. Thus, for example, the first wiring harness 416 may also include a sixth electrical connector 428 that may be electrically connectable to at least one auxiliary headlight 110 and a seventh electrical connector 430 that may be electrically connectable to at least one auxiliary supplemental light 112. In one embodiment, the first wiring harness 416 includes an electrical connector for each of the auxiliary head lights and each of the auxiliary supplemental lights that must be illuminated. The first wiring harness 416 may also include additional electrical connectors 432 used to connect to various components of the auxiliary implement 100. Any number of electrical connectors chosen with the sound judgment of a person of skill in the art, may be included with the first wiring harness 416. If desired, a connector cap may be secured to the wiring harness 416 near any electrical connector that can use such a cap to protect the electrical connector when not in use. Electrical connector 418, for example, has a connector cap 434.

With reference now to FIGURES 5-7 and 14, the auxiliary wiring 140 may include a second wiring harness 440. Wiring harness 440 may include: a first end that is electrically connectable to the power source 13 (a pair of battery loops 442, one to receive the negative battery terminal and the other to receive the positive battery terminal, may be used for this purpose in one embodiment); and, a second end with a power connector 440. The power connector 440 may be electrically connectable to the power connector 418 of the first wiring harness 416 and may be designed to transmit power from the power source 13 to the power connector 418 of the first wiring harness to power the auxiliary implement 100. The power connector 440 may include an electrical connector cap 446, as shown.

With reference now to FIGURES 5-7, 11A, 11B and 15, the auxiliary wiring 140 may include a third wiring harness 450. Wiring harness 445 may include: a first electrical connector 452 that is electrically connectable to the vehicle electric plug 60 (such as previously described electrical connector plugs 140, 142 shown in FIGURES 11a and 11B, respectively); a second electrical connector 454 that is electrically connectable to the fifth electrical connector 426 of the first wiring harness 416; and, a third electrical connector 456 that is designed to be connected to the operator adjustable auxiliary light control 116 and the operator adjustable auxiliary implement control 104. The third wiring harness 450 may be designed to transmit an electrical signal from the vehicle electric plug 60 to the first wiring harness 416.

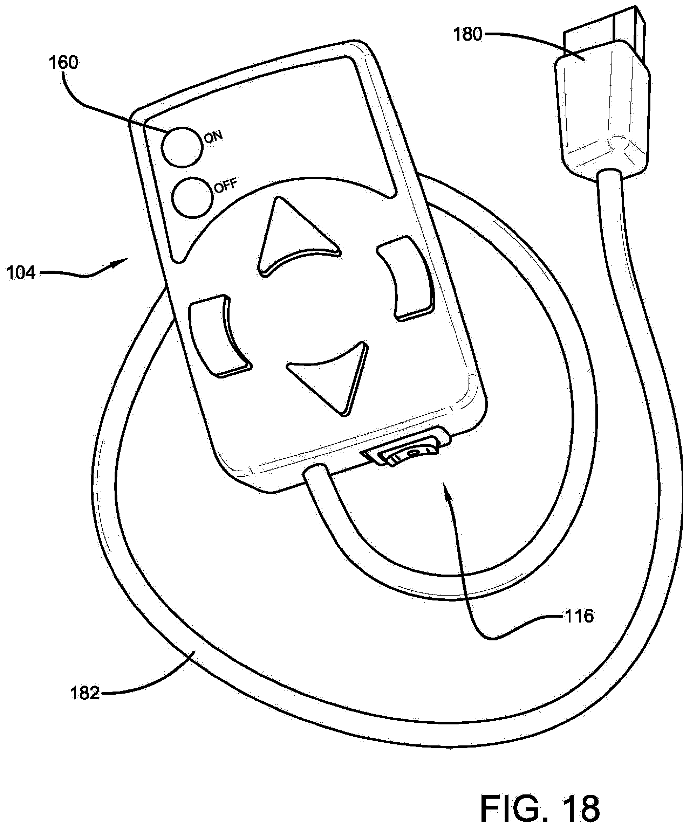

With reference now to FIGURES 5-9, 13- 15 and 18, one or more of the electrical connectors described may, in some embodiments, be electric plugs. In some embodiments, shown, the following electric connectors are electric plugs: the power connector 418 of the first wiring harness 416; the second electrical connector 420 of the first wiring harness 416; the fifth electrical connector 426 of the first wiring harness 416; the sixth electrical connector 428 of the first wiring harness 416; the power connector 444 of the second wiring harness 440; the first electrical connector 452 of the third wiring harness 450; the second electrical connector 454 of the third wiring harness 450; and, the third electrical connector 456 of the third wiring harness 450.

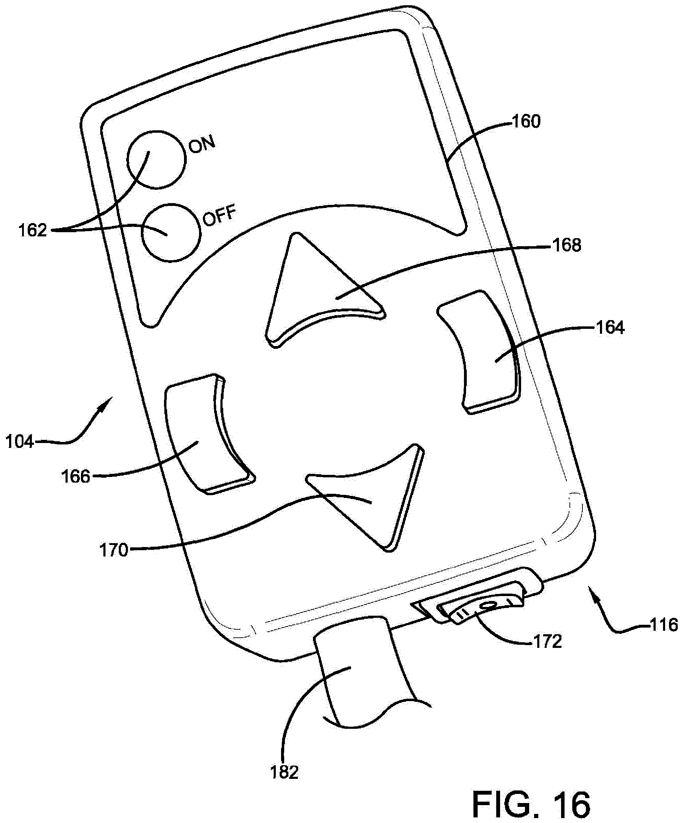

With reference now to FIGURES 5-7 and 16, in one embodiment, not shown, the operator adjustable auxiliary implement control 104 and the operator adjustable auxiliary light control 116 user operable device 406 are supported within individual controller housings. In another embodiment, shown in FIGURES 6 and 16, the operator adjustable auxiliary implement control 104 and the operator adjustable auxiliary light control 116 are both supported to a common (the same) hand held controller housing 160. The controller housing(s) may be positioned in any location chosen with the sound judgement of a person of skill in the art. In one embodiment the controller housing(s) may be maintained within the vehicle so that the vehicle's driver can also operate the controls. The controller housing 160 may have a power ON/OFF switch 162 that is operable to place both the auxiliary headlight(s) 110 and the auxiliary supplemental light(s) 112 into unilluminated conditions when in the power OFF condition. The power ON/OFF switch 162 may also, or alternatively, be operable to turn OFF the operator adjustable auxiliary implement control 104 when in the OFF condition.

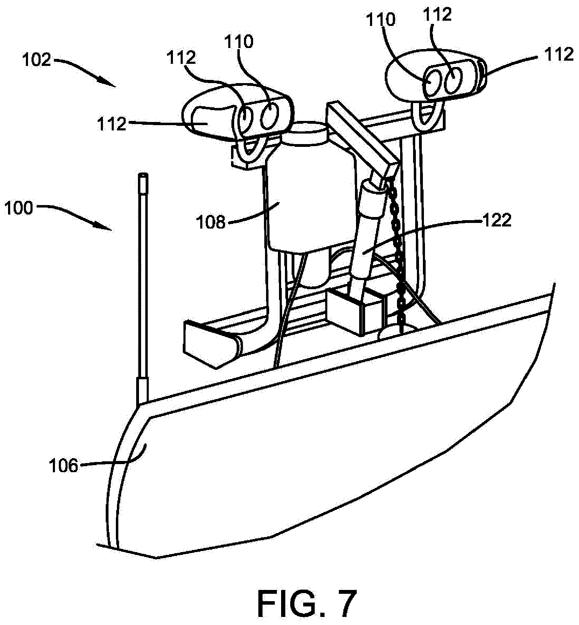

With reference now to FIGURES 5-7 and 16, as noted earlier the operator adjustable auxiliary implement control 104 may be operable to operate at least one function of the auxiliary implement 100 chosen with the sound judgment of a person of skill in the art. In one embodiment, the auxiliary implement 100 is a snowplow assembly, such as that shown in FIGURE 7, and the operator adjustable auxiliary implement control 104 may have the capability to operate four functions related to the snowplow blade 106: a control button 164 that can be used to cause the snowplow blade 106 to angle toward the right; a control button 166 that can be used to cause the snowplow blade 106 to angle toward the left; a control button 168 that can be used to cause the snowplow blade 106 to be raised (such as to raise above the ground surface being plowed); and, a control button 170 that can be used to cause the snowplow blade 106 to be lowered (such as to lower onto the ground surface being plowed). As these operations are well known to those of skill in the art, further details will not be provided here.

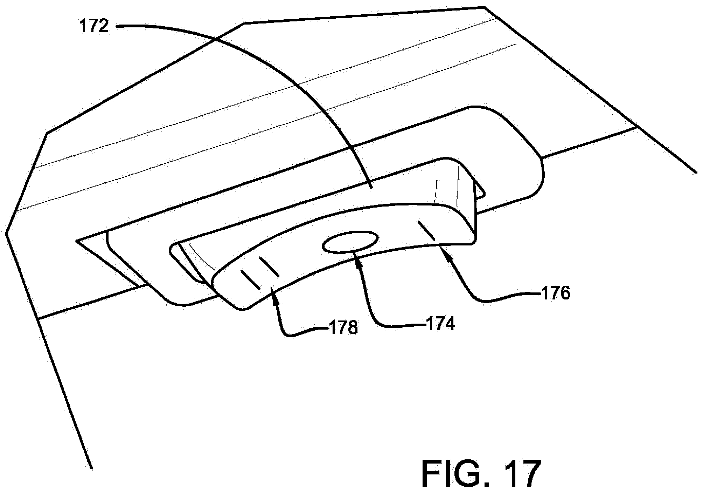

With reference now to FIGURES 5-7 and 16-17, the operator adjustable auxiliary light control 116 may be operable to operate the auxiliary headlights 110 in any manner chosen with the sound judgment of a person of skill in the art. For the embodiment shown, the operator adjustable auxiliary light control 116 may comprise a control button 172 that is adjustable by the operator into three conditions: auxiliary headlights 110 powered OFF by pressing on portion 174 of the button 172; auxiliary headlights 110 in low beam condition by pressing on portion 176 of the button 172; and, auxiliary headlights 110 in high beam condition by pressing on portion 178 of the button 172. As these operations are well known to those of skill in the art, further details will not be provided here.

With reference now to FIGURES 6, 15-16 and 18, as noted earlier the auxiliary wiring 140 may connect to the operator adjustable auxiliary implement control 104 and to the operator adjustable auxiliary light control 116. This connection can be of any form chosen with the sound judgment of a person of skill in the art. In one embodiment, the third wiring harness 450 has a third electrical connector 456 that is designed to be connected to the operator adjustable auxiliary implement control 104 and to the operator adjustable auxiliary light control 116. In one specific embodiment, the third electrical connector 456 connects directly to the controller housing 160. In another specific embodiment, the third electrical connector 456 electrically connects to a controller electrical connector 180 which is hardwired 182 to the controller housing 160.

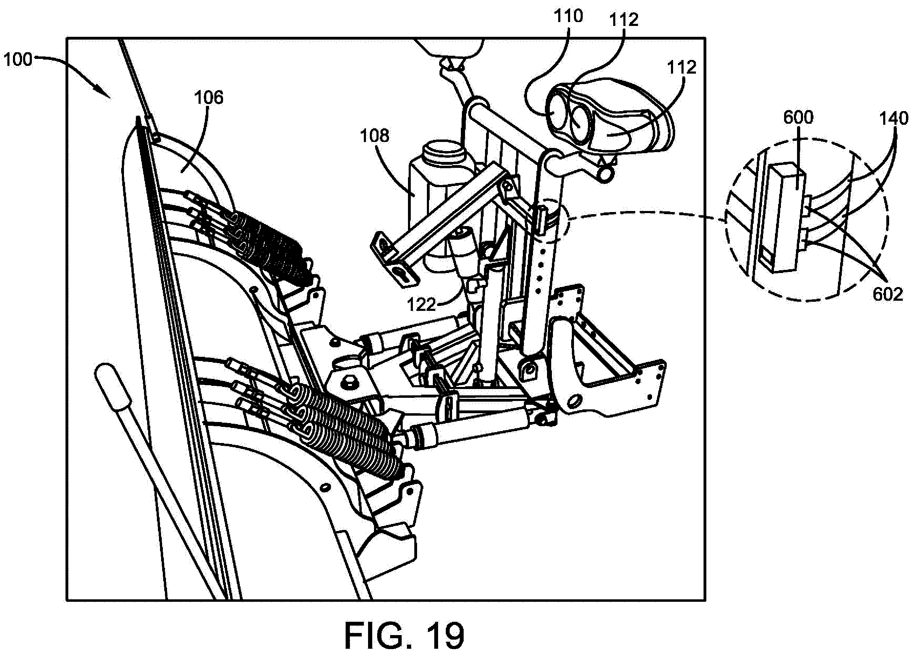

With reference now to FIGURES 5-7 and 19, as noted earlier the auxiliary wiring 140 may electrically connect to the auxiliary lighting system 102. In some embodiments this electrical connection is made by electrically connecting to (plugging into) a controller 600 which in some embodiments may include a microprocessor. Alternatively, this electrical connection is made by connection to another component(s) that connect to the controller 600. The operation of the controller 600 will be discussed further below. In one embodiment, the controller 600 may have one or more ports 602 to which the auxiliary wiring 140 connects.

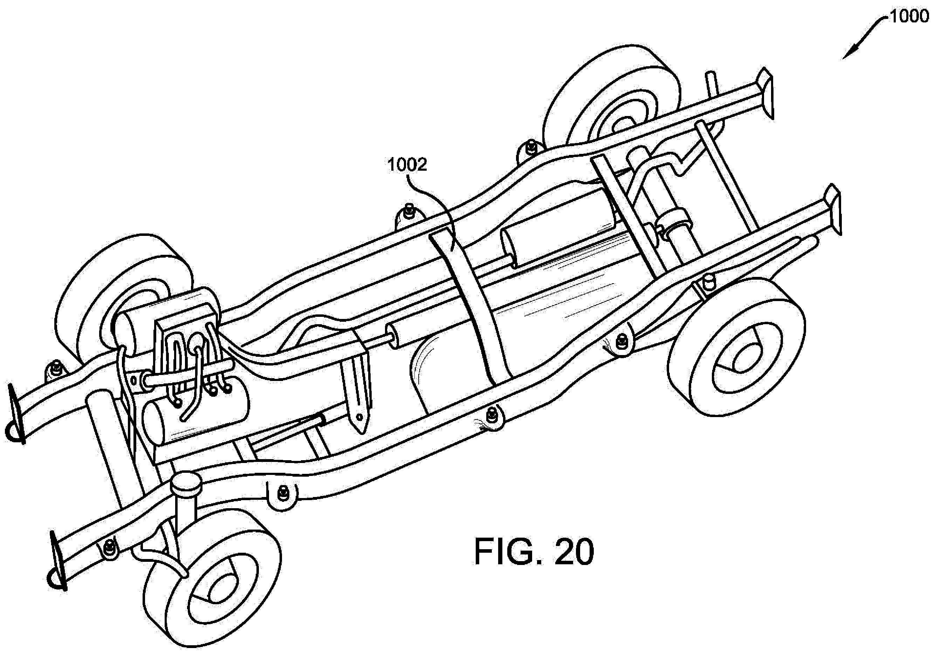

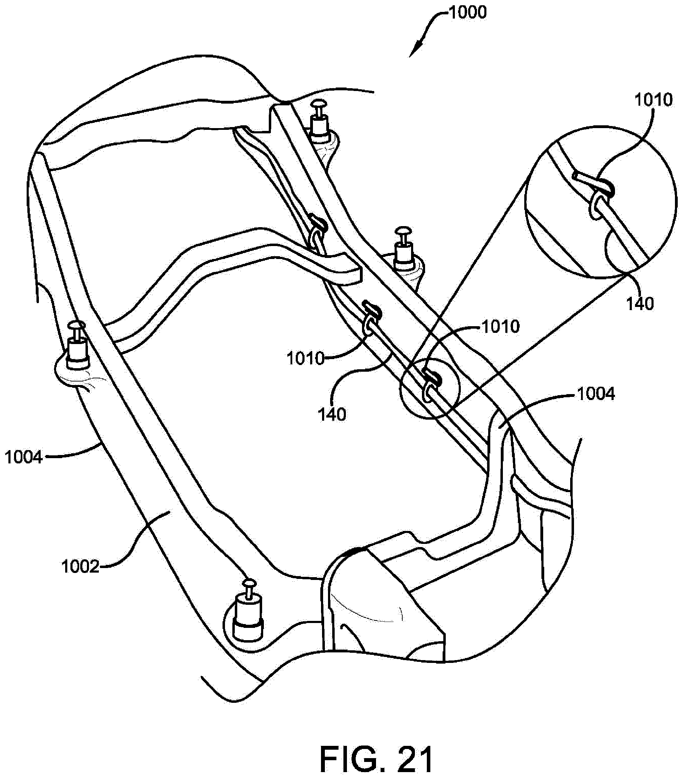

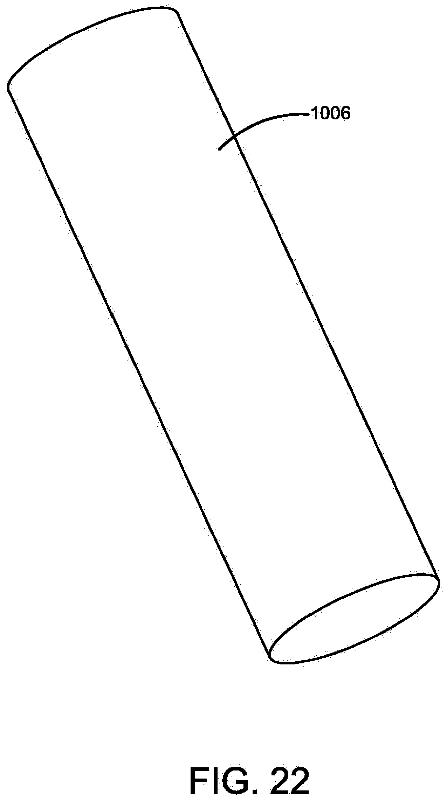

With reference now to FIGURES 5-7, 13-15 and 20-22, the auxiliary wiring 140, whether in the form of the three wiring harnesses 416, 440 and 450 discussed above or otherwise, may be secured to the auxiliary implement 100, and/or the auxiliary lighting system 100, and/or the vehicle, or any some combination in any manner chosen with the sound judgment of a person of skill in the art. According to one embodiment, at least a portion of the auxiliary wiring 140 is secured under the chassis 1000 of the vehicle and runs from the vehicle electric plug 60 to the auxiliary lighting system 102. If the vehicle electric plug 60 is a trailer plug (and thus positioned at the rear of the vehicle) then at least a portion of the auxiliary wiring 140 may run lengthwise from the rear of the vehicle to the auxiliary lighting system 102. According to another embodiment, the at least a portion of the auxiliary wiring 140 can terminate at the front of the vehicle whereby a second connection could be made with the auxiliary lighting system 102. In some embodiments the auxiliary wiring 140 can be secured to the chassis 1000, such as to the vehicle's frame rail 1004, using zip-ties 1100, twist ties, wires, or any other fastener chosen by the sound judgment of a person of ordinary skill in the art. The auxiliary wiring 140 may be shielded wire such as the hex-wire typically used for electronics. According to another embodiment some or all of the auxiliary wiring 140 can be routed through a conduit, such as conduit 1006 shown in FIGURE 22. The conduit 1006 can be mounted to the chassis 1000, such as to the vehicle's frame rail 1004, using zip-ties 1010, automotive grade tape, or other fasteners. The conduit 1006 could be formed of any material chosen with the sound judgment of a person of skill in the art, such as polyvinyl chloride (PVC). According to another embodiment, the auxiliary wiring 140, whether in a conduit or otherwise, can be routed through the interior of the vehicle's frame 1002. In some embodiments, the auxiliary wiring 140 can be aligned to the driver side or passenger side of the vehicle. In one embodiment, the wiring is on the same side of the vehicle as the vehicle battery.

With reference now to FIGURE 6, in some embodiments, a sensor 184 may be operable to turn off the auxiliary headlight(s) 110 and/or the auxiliary supplemental light(s) 112 when the vehicle lights are turned off. The operation of sensor 184 may be in any manner chosen with the sound judgment of a person of skill in the art. In one embodiment, the sensor 184 works with a microprocessor described elsewhere in this patent. In another embodiment the sensor 184 works with a relay in a known manner.

With reference now to FIGURES 5-7, 13-15, 19 and 26 in some embodiments the wiring harnesses 416, 440, 450 may be used as follows after the auxiliary implement 100 has been mounted to the vehicle and the auxiliary lighting system 102 has been mounted to the vehicle and/or to the implement 100. The wiring harnesses 416, 440, 450 may be secured as discussed above. The second electrical connector 420 of the first wiring harness 416 may be electrically connected to the auxiliary light(s) 104 (either directly or via a microprocessor). If the second electrical connector 420 is an electric plug, then it may plug into the auxiliary light(s). The third electrical connector 422 of the first wiring harness 416 may be electrically connected to the auxiliary implement 100. The first end of the second wiring harness 436 (using, in one embodiment, battery loops 438) may be electrically connected to the vehicle battery 12. The power connector 444 of the second wiring harness 440 may be electrically connected to the power connector 418 of the first wiring harness 416 to enable power to be transmitted from the vehicle battery 414 to the auxiliary snow and/or ice removal implement 100. If the power connectors 444, 418 are both electric plugs, then power connector 444 may be plugged into power connector 418 to establish the electrical connection.

With reference now to FIGURES 5-7, 13-15, and 19, the first electrical connector 452 of the third wiring harness 450 may be electrically connected to the vehicle electric plug 60 to enable an electric signal to be transmitted from the vehicle electric plug 60 to the first wiring harness 416. If the first electrical connector 452 is an electric plug, the electrical connector 452 may be plugged into the vehicle electric plug 60 to establish the electrical connection. The position of the vehicle electric plug 60 on the vehicle will determine the required length for the third wiring harness 450. The second electrical connector 454 of the third wiring harness 450 may be electrically connected to the fifth electrical connector 426 of the first wiring harness 416. If the electrical connectors 454, 426 are both electric plugs, then electrical connector 454 may be plugged into electrical connector 426 to establish the electrical connection. Once the wiring harnesses 416, 440 and 450 are properly connected, the operator adjustable auxiliary implement control 104 may be operable to operate at least one function of the auxiliary implement 100; the operator adjustable auxiliary light control 116 may be operable to operate the auxiliary light(s) 104; and, the operator adjustable vehicle light control 20 may be operable to operate the auxiliary headlight(s) 110. One or more of the controls 104, 116, 20 may be manually operable in some embodiments.

There are numerous advantages of using such "hardwired" devices and methods as compared to wireless devices and methods (discussed further below). These advantages include the lack of electrical interference and the lack of control delays both of which are often found in wireless systems. Another advantage is that all the steps are safely accomplished without the aid of an electrical technician. This is because no splicing or cutting of any wiring is required. Thus, none of the vehicle's electrical system, in function or in structure, is altered in any way. Thus, for example, with reference to FIGURES 1-2 and 6, the vehicle headlights 14 do not have to be detached and the auxiliary wiring 140 is not electrically connected to the vehicle light wiring 22, Also, there is no required reset or adjustments to the vehicle's computer. Another advantage, is that the various electrical plugs provide for easy "plug-and-play" connections. Thus, the time required to install this invention is greatly reduced over known systems. FIGURE 6, especially when compared with FIGURE 2, shows how greatly simplified the use of this invention is.

In another embodiment, the auxiliary lighting system 102 may be powered by a separate power source 450 shown in FIGURE 5, which may be a battery, which is part of the auxiliary implement 100.

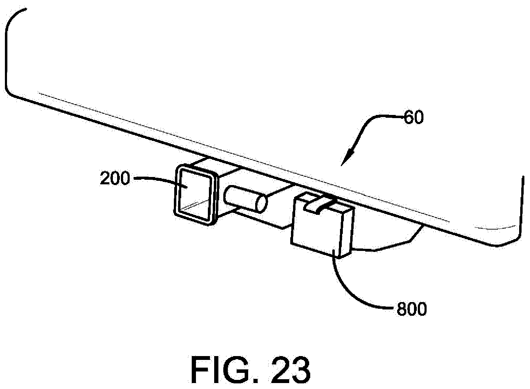

With reference now to FIGURES 5-7 and 23, the auxiliary lighting system 102 may include a controller 600 that uses a microprocessor. Controller 600 may, in one embodiment, be a controller that controls not only the auxiliary lighting system 102, but also one or more other portions of the auxiliary implement 100. In another embodiment, the controller 600 may control only the auxiliary lighting system 102. Controller 600 may be mounted on the auxiliary implement 100. According to alternative embodiments, the controller 600 can be mounted or on the vehicle, or within the engine compartment of the vehicle.

With continuing reference to FIGURES 5-7 and 23, the controller 600 may include several circuits that can perform one or more functions. The controller 600 may include a receiver 700 which receives incoming signals 710. In one embodiment, the signals 710 are sent by wires such as from the auxiliary wiring 140.

With reference now to FIGURES 5-7, 10A-10D, and 23, some non-limiting embodiments of how the microprocessor 702 may be programmed to be used with the auxiliary lighting system 102 will now be described. If the vehicle electric plug 60 includes a connection 308 for ground, this signal could be used for grounding purposes as is well known to those of skill in the art. The connections 302 and 304 for left and right turn signals can be used to control left and right turn signal lights on the auxiliary lighting system 102 similar to such lights that might be on a trailer and on the vehicle. If the vehicle electric plug 60 includes a connection 312 for auxiliary power, this connection could be used to power any component in any manner chosen by a person of skill in the art. Such a component may be an auxiliary lighting system 102 component and/or an auxiliary implement 100 component. Any vehicle electric plug connection that is not desired to be used can be repurposed or terminated, as determined by one of ordinary skill in the art. The connection 310 for trailer power brakes, for example, could be terminated.

With reference now to FIGURES 5-7 and 10A-10D, connections 302 and 304 can also be used for indicating that the vehicle operator has activated the vehicle brakes 24 as noted above. The connection 310 could also be used for this purpose. This braking signal could be used with the auxiliary lighting system 102 in a number of different ways. In one embodiment, one or more lights on the auxiliary lighting system 102 could be illuminated continuously for the duration of the braking event. In another embodiment, left and right turn signal lights on the auxiliary lighting system 102 could be controlled to flash on and off for the duration of the braking event. These embodiments may be used indicate to observers in front of the vehicle that the vehicle is slowing and/or that they should exercise caution. The brake signal could also, in some embodiments, be used with respect to the auxiliary implement 100. In one non-limiting example, the brake signal could be used to adjust the position of the snowplow assembly. The connection 314 for reverse lights could also be used to change the illumination (higher or lower level or illumination) of the auxiliary lighting system 102, such as one or more of the auxiliary supplemental lights 112, when the vehicle brakes 24 are operated. This then would provide a clear signal to those near the vehicle that the vehicle is being braked.

In alternate embodiments, the vehicle electric plug 60 can also be used to control auxiliary headlights 40 in any manner chosen with the sound judgment of a person of skill in the art. In one non-limiting example, it is common for vehicle light controls to be adjustable between: (1) an "off" or no power condition; (2) park or running lights "on" condition; (3) headlights "on" condition; and, (4) headlight high beams "on" condition. When the vehicle lights are in the off condition, no power goes to the vehicle head lights or high beams or to the vehicle's tail lights. In this case, connection 306 for tail lights would not be powered and the microprocessor 702 may be programmed to use this signal as an indication to provide no power to the auxiliary headlights - thus an "off" condition for the auxiliary headlights to match the vehicle headlights. When the vehicle lights are in any of the on conditions (whether park or running lights on, or headlights on, or high beams on), connection 306 for tail lights would be powered (an "on" condition) and the microprocessor 702 may be programmed to use this signal as an indication to provide power to the auxiliary headlights - thus an "on" condition for the auxiliary headlights. Whenever the auxiliary lighting system 102 is attached to the vehicle, the vehicle operator may treat all "headlight on" conditions (conditions 2, 3 and 4 discussed above) the same; namely, manually adjusting the vehicle light controls to be in the park or running lights "on" condition. In this way, neither the vehicle headlights nor the vehicle high beams will be "on" and thus will not reflect off of the auxiliary implement 100 back to the vehicle thereby interfering with the operator's vision.

In some embodiments a signal is communicated from the vehicle electric plug 60 through the auxiliary wiring 140 and eventually to the microprocessor 702. Additional and/or alternative intermediate components may also be used in other embodiments. For clarity, the expression "directly or indirectly" may be used in this patent with regard to signals (whether wired or wireless). It is to be understood that "directly" means a signal that travels directly from one component to a second component and indirectly" means a signal that travels from one component to a second component but with one or more intermediate components also used. Thus, for example, a signal that travels from auxiliary wiring 140 to microprocessor 702 with no intermediate components would be a direct signal. In this case, the microprocessor's operation may be said to be based directly on the signal. In another example, a signal that travels from the auxiliary wiring 140 to microprocessor 702 with one or more intermediate components (such as receiver 700) would be an indirect signal. In this case, the microprocessor's operation may be said to be based indirectly on the signal - regardless of what and how many intermediate components may be used. As another example, a wireless signal that travels from transponder 800 to microprocessor 702 with no intermediate components would be a direct signal. In this case, the microprocessor's operation may be said to be based directly on the wireless signal. In yet another example, a wireless signal that travels from transponder 800 to microprocessor 702 with one or more intermediate components (such as receiver 700) would be an indirect wireless signal. In this case, the microprocessor's operation may be said to be based indirectly on the wireless signal - regardless of what and how many intermediate components may be used.

To use this invention in some embodiments, the operator may first acquire the proper auxiliary wiring 140 to match the vehicle's electric plug 60 and the auxiliary lighting system 102 including, when used, the controller 600. The operator may then attach the auxiliary wiring 140 to the vehicle - embodiments of this attachment are described above. The operator may then electrically connect the auxiliary wiring 140, which may include the auxiliary plug 142, into the vehicle electric plug 60. The operator may then connect the auxiliary wiring 140 to the auxiliary lighting system 102. In some embodiments the auxiliary wiring 140 may be connected to the controller 600 or to another component which is ultimately connected to the controller 600. This may complete the attachment. In use, the operator may simply adjust the vehicle lights, typically using vehicle light controls within the vehicle, to match the atmospheric light condition. If the atmospheric light condition is relatively lighter, there may be no need to turn on the vehicle lights. As a result, the vehicle electric plug 60 may indicate that no tail lights are required. The microprocessor 702 may use that indication to keep the auxiliary headlight(s) in an off condition. If the atmospheric light condition is relatively darker, there may be a need for the operator to turn on the vehicle lights. As a result of the operator turning on the vehicle lights, the vehicle electric plug 60 may indicate that tail lights are required. The microprocessor 702 may use that indication to place the auxiliary headlight(s) in an on condition. Turn signals, if applicable, may be used as described above. Similarly, a brake signal, if applicable, may be used as described above.

To use this invention in some embodiments, the operator may first acquire the proper transponder 800 to match the vehicle's electric plug 60 and the auxiliary lighting system 102 including, when applicable, the controller 600. The operator may then attach the transponder 800 to the vehicle - embodiments of this attachment are described above. The operator may then electrically connect the transponder 800 to the vehicle electric plug 60. Embodiments for this connection are described above. This may complete the attachment. In use, the operator may simply adjust the vehicle lights, typically using vehicle light controls within the vehicle, to match the atmospheric light condition. If the atmospheric light condition is relatively lighter, there may be no need to turn on the vehicle lights. As a result, the vehicle electric plug 60 may indicate that no tail lights are required. The microprocessor 702 may use that indication to keep the auxiliary headlight(s) in an off condition. If the atmospheric light condition is relatively darker, there may be a need for the operator to turn on the vehicle lights. As a result of the operator turning on the vehicle lights, the trailer plug 202 may indicate that tail lights are required. The microprocessor 702 may use that indication to place the auxiliary headlight(s) in an on condition. Turn signals, if applicable, may be used as described above. Similarly, a brake signal, if applicable, may be used as described above.

To use this invention in some embodiments, the operator may first acquire the proper auxiliary wiring 140 to match the vehicle's electric plug 60 and the auxiliary lighting system 102. The operator may then attach the auxiliary wiring 140 to the vehicle - embodiments of this attachment are described above. The operator may then electrically connect the auxiliary wiring 140 to the vehicle electric plug 60, to the power source 13, to the auxiliary implement 100, to the auxiliary lighting system 102, to the operator adjustable auxiliary implement control 104 and to the operator adjustable auxiliary light control 116. This may complete the attachment. As explained above, these electrical connections may be simple "plug in" attachments. In use, the operator may simply adjust the operator adjustable vehicle light control 20 to operate the auxiliary supplemental lights 112, auxiliary turn signal lights and/or auxiliary park lights for example, based directly or indirectly on the electrical signal transmitted from the vehicle electric plug 60. The operator may also simply adjust the operator adjustable auxiliary light control 116 to operate the auxiliary headlights 110 to illuminate the ground surface upon which the vehicle travels in place of the vehicle headlights 14. Finally, the operator may simply adjust the operator adjustable auxiliary implement control 104 to operate at least one function of the auxiliary implement 100 - for example, to raise or lower a snowplow blade 106.

As described above, the present disclosure has been described with preferred embodiments thereof and it is understood that many changes and modifications to the described embodiments can be carried out without departing from the scope of the appended claims.

## Claims

1. An auxiliary apparatus for use with a vehicle having a front, first and second sides, a back, and a trailer plug (202) positioned at the back of the vehicle, the auxiliary apparatus comprising:
an auxiliary implement (100) that is removably mountable to at least one of: the vehicle's front; and, at least one of the vehicle's first and second sides;
an auxiliary lighting system (114) for use with the auxiliary implement (100) including at least one auxiliary headlight (250); and,
a controller (600) comprising a microprocessor (702);
**characterized by**:
a wire bundle (402) that: has a first end that is electrically hardwire connectable to the trailer plug (202); has a second end that is electrically hardwire connectable to at least one of the auxiliary lighting system (114) and the controller (600); and, capable of transmitting an electrical signal from the trailer plug (202) to the second end; and,
wherein the controller (600): is electrically connectable to at least one of the wire bundle (402) and the auxiliary lighting system (114); and, the microprocessor (702) is programmed to operate the at least one auxiliary headlight (250) based directly or indirectly on the electrical signal.

2. The auxiliary apparatus of claim 1 wherein:
the wire bundle (402) is securable to the vehicle to run lengthwise from the back of the vehicle to the front of the vehicle.

3. The auxiliary apparatus of claim 1 or 2 wherein:
the vehicle comprises at least one tail light; and,
the controller (600) operates the auxiliary headlight (250) into: an on condition when the trailer plug (202) indicates that the vehicle's at least one tail light is in an on condition; and, an off condition when the trailer plug (202) indicates that the vehicle's at least one tail light is in an off condition.

4. The auxiliary apparatus of any of the preceding claims, wherein:
the vehicle comprises at least one blinker light;
the at least one auxiliary headlight (25) is an auxiliary blinker light (254); and,
the controller (600) operates the auxiliary blinker light (254) into: a blinking condition when the trailer plug (202) indicates that the vehicle's at least one blinker light is in a blinking condition; and, an off condition when the trailer plug (202) indicates that the vehicle's blinker light is in an off condition.

5. The auxiliary apparatus according to any of the preceding claims wherein the auxiliary implement (100) is a snowplow assembly.

6. The auxiliary apparatus according to any of the preceding claims wherein:
the first end of the wire bundle (402) comprises an auxiliary plug (400) that is electrically connectable to the trailer plug (202), and in particular, the auxiliary apparatus comprises:
a pigtail adapter (500) that is electrically connectable to the trailer plug (202) and that has first and second outlets (502, 504); and,
wherein at least one of the first and second outlets (502, 504) is electrically connectable to the auxiliary plug (400).

7. The auxiliary apparatus according any of the preceding claims wherein the controller (600) comprises at least one of:
- a receiving unit (900) that receives the electrical signal;
- at least one port (602) for use in connecting to the auxiliary lighting system (114).

8. A method of using an auxiliary lighting system (114) with a vehicle having a front, first and second sides, a back, and a trailer plug (202) positioned at the back of the vehicle, the method comprising the steps of:
(A) providing an auxiliary implement (100);
(B) providing an auxiliary lighting system (114) for use with the auxiliary implement (100) that includes at least one auxiliary headlight (250); and,
(C) providing a controller (600) comprising a microprocessor (702);
**characterized by**:
(D) designing the auxiliary implement (100), a wire bundle (402), and the controller (600) to be operable according to the following steps:
(1) mounting the auxiliary implement (100) to at least one of: (a) the vehicle's front; and, (b) at least one of the vehicle's sides;
(2) mounting the auxiliary lighting system (114) to at least one of the vehicle and the auxiliary implement (100);
(3) mounting the controller (600) to at least one of: (a) the vehicle's front; (b) at least one of the vehicle's sides; (c) the auxiliary implement (100); and, (d) the auxiliary lighting system (114);
(4) electrically hardwire connecting a first end of the wire bundle (402) to the trailer plug (202);
(5) electrically hardwire connecting a second end of the wire bundle (402) to at least one of the auxiliary lighting system (114) and the controller (600);
(6) electrically connecting the controller (600) to at least one of the wire bundle (402) and the auxiliary lighting system (114);
(7) transmitting an electrical signal from the trailer plug (202) through the wire bundle (402) to the second end the wire bundle (402); and,
(8) using the controller (600) to operate the at least one auxiliary headlight (250) based directly or indirectly on the electrical signal.

9. The method of using an auxiliary lighting system (114) of claim 8 wherein step (D)(5) comprises the steps of:
extending the wire bundle (402) from the back of the vehicle to the front of the vehicle; and,
securing the wire bundle (402) to the vehicle.

10. The method of using an auxiliary lighting system (114) of claim 8 or 9 wherein:
the vehicle comprises at least one tail light; and,
step (D)(8) comprises the step of: operating the auxiliary headlight (250) into: an on condition when the trailer plug (202) indicates that the vehicle's at least one tail light is in an on condition; and, an off condition when the trailer plug (202) indicates that the vehicle's at least one tail light is in an off condition.

11. The method of using an auxiliary lighting system (114) according to any of claims 8-10 wherein:
the vehicle comprises at least one blinker light;
step (B) comprises the step of providing the at least one auxiliary headlight (250) to comprise an auxiliary blinker light (254); and,
step (D)(8) comprises the step of: operating the auxiliary blinker light (254) into: a blinking condition when the trailer plug (202) indicates that the vehicle's at least one blinker light is in a blinking condition; and, an off condition when the trailer plug (202) indicates that the vehicle's at least one blinker light is in an off condition.

12. An auxiliary lighting system (114) for use with an auxiliary apparatus according to any of claims 1-7; the auxiliary lighting system (114) comprising:
at least one auxiliary headlight (250); and,
a controller (600) comprising a microprocessor (702);
**characterized by**:
a wire bundle (402) that: has a first end that is electrically hardwire connectable to the trailer plug (202); has a second end that is electrically hardwire connectable to at least one of the auxiliary lighting system (114) and the controller (600); and, transmits an electrical signal from the trailer plug (202) to the second end; and,
wherein the controller (600): is electrically connectable to at least one of the wire bundle (402) and the auxiliary lighting system (114); and, the microprocessor (702) is programmed to operate the at least one auxiliary light (104) based directly or indirectly on the electrical signal.

13. The auxiliary lighting system (114) of claim 12 wherein:
the vehicle comprises at least one tail light; and,
the controller (600) operates the auxiliary headlight (250) into: an on condition when the trailer plug (202) indicates that the vehicle's at least one tail light is in an on condition; and, an off condition when the trailer plug (202) indicates that the vehicle's at least one tail light is in an off condition.

14. The auxiliary lighting system (114) of claim 12 or 13 wherein:
the vehicle comprises at least one blinker light; and,
the controller (600) operates the auxiliary blinker light (254) into: a blinking condition when the trailer plug (202) indicates that the vehicle's at least one blinker light is in a blinking condition; and, an off condition when the trailer plug (202) indicates that the vehicle's blinker light is in an off condition.

15. The auxiliary lighting system (114) according to any of claims 12-14 wherein:
the controller (600) comprises at least one of:
- a receiving unit (900) that receives the electrical signal;
- at least one port (602) for use in connecting to the auxiliary lighting system (114).

## Patentansprüche

1. Hilfsvorrichtung zur Verwendung mit einem Fahrzeug, das eine Vorderseite, erste und zweite Seiten, eine Rückseite und einen Anhängerstecker (202), der an der Rückseite des Fahrzeugs angeordnet ist, aufweist, wobei die Hilfsvorrichtung umfasst:
ein Hilfsgerät (100), das abnehmbar an mindestens einem der folgenden montiert werden kann: der Fahrzeugvorderseite; und mindestens einer der ersten und zweiten Seite des Fahrzeugs;
ein Hilfsbeleuchtungssystem (114) zur Verwendung mit dem Hilfsgerät (100), das mindestens ein Hilfsvorderlicht (250) umfasst; und
eine Steuerung (600), die einen Mikroprozessor (702) umfasst;
**gekennzeichnet durch**:
ein Aderbündel (402), das: ein erstes Ende aufweist, das elektrisch fest mit dem Anhängerstecker (202) verdrahtet werden kann; ein zweites Ende aufweist, das elektrisch fest mit mindestens einem Hilfsbeleuchtungssystem (114) und der Steuerung (600) verdrahtet werden kann; und in der Lage ist, ein elektrisches Signal von dem Anhängerstecker (202) zum zweiten Ende zu übertragen; und,
wobei die Steuerung (600): elektrisch mit mindestens einem von dem Aderbündel (402) und dem Hilfsbeleuchtungssystem (114) verbunden werden kann; und der Mikroprozessor (702) dazu programmiert ist, das mindestens eine Hilfsvorderlicht (250) direkt oder indirekt basierend auf dem elektrischen Signal zu betätigen.

2. Hilfsvorrichtung nach Anspruch 1, wobei:
das Aderbündel (402) an dem Fahrzeug befestigt werden kann, um in Längsrichtung von der Rückseite des Fahrzeugs zur Vorderseite des Fahrzeugs zu verlaufen.

3. Hilfsvorrichtung nach Anspruch 1 oder 2, wobei:
das Fahrzeug mindestens ein Rücklicht umfasst; und
die Steuerung (600) das Hilfsvorderlicht (250) betätigt in: einen Ein-Zustand, wenn der Anhängerstecker (202) anzeigt, dass sich das mindestens eine Rücklicht des Fahrzeugs in einem Ein-Zustand befindet; und einen Aus-Zustand, wenn der Anhängerstecker (202) anzeigt, dass sich das mindestens eine Rücklicht des Fahrzeugs in einem Aus-Zustand befindet.

4. Hilfsvorrichtung nach einem der vorhergehenden Ansprüche, wobei:
das Fahrzeug mindestens ein Blinklicht umfasst;
das mindestens eine Hilfsvorderlicht (25) ein Hilfsblinklicht (254) ist; und
die Steuerung (600) das Hilfsblinklicht (254) betätigt in: einen Blinkzustand, wenn der Anhängerstecker (202) anzeigt, dass sich das mindestens eine Blinklicht des Fahrzeugs in einem Blinkzustand befindet; und einen Aus-Zustand, wenn der Anhängerstecker (202) anzeigt, dass sich das Blinklicht des Fahrzeugs in einem Aus-Zustand befindet.

5. Hilfsvorrichtung nach einem der vorhergehenden Ansprüche, wobei das Hilfsgerät (100) eine Schneepflug-Anordnung ist.

6. Hilfsvorrichtung nach einem der vorhergehenden Ansprüche, wobei:
das erste Ende des Aderbündels (402) einen Hilfsstecker (400) umfasst, der elektrisch mit dem Anhängerstecker (202) verbunden werden kann, und wobei die Hilfsvorrichtung insbesondere umfasst:
einen Pigtail-Adapter (500), der elektrisch mit dem Anhängerstecker (202) verbunden werden kann und der erste und zweite Ausgänge (502, 504) aufweist; und
wobei mindestens einer der ersten und zweiten Ausgänge (502, 504) elektrisch mit dem Hilfsstecker (400) verbunden werden kann.

7. Hilfsvorrichtung nach einem der vorhergehenden Ansprüche, wobei die Steuerung (600) mindestens eines umfasst, von:
- einer Empfangseinheit (900), die das elektrische Signal empfängt;
- mindestens einem Anschluss (602) zur Verwendung beim Verbinden mit dem Hilfsbeleuchtungssystem (114).

8. Verfahren zur Verwendung eines Hilfsbeleuchtungssystems (114) mit einem Fahrzeug, das eine Vorderseite, erste und zweite Seiten, eine Rückseite und einen Anhängerstecker (202), der an der Rückseite des Fahrzeugs angeordnet ist, umfasst, wobei das Verfahren folgende Schritte umfasst:
(A) Bereitstellen eines Hilfsgeräts (100);
(B) Bereitstellen eines Hilfsbeleuchtungssystems (114) zur Verwendung mit dem Hilfsgerät (100), das mindestens ein Hilfsvorderlicht (250) umfasst; und
(C) Bereitstellen einer Steuerung (600), die einen Mikroprozessor (702) umfasst;
**gekennzeichnet durch**:
(D) Ausgestalten des Hilfsgeräts (100), eines Aderbündels (402) und der Steuerung (600), um gemäß den folgenden Schritten betätigbar zu sein:
(1) Montieren des Hilfsgeräts (100) an mindestens einem von: (a) der Vorderseite des Fahrzeugs; und (b) mindestens einer der Seiten des Fahrzeugs;
(2) Montieren des Hilfsbeleuchtungssystems (114) an mindestens einem von dem Fahrzeug und dem Hilfsgerät (100);
(3) Montieren der Steuerung (600) an mindestens einem von: (a) der Vorderseite des Fahrzeugs; (b) mindestens einer der Seiten des Fahrzeugs; (c) dem Hilfsgerät (100); und (d) dem Hilfsbeleuchtungssystem (114);
(4) elektrisch festes Verdrahten eines ersten Endes des Aderbündels (402) mit dem Anhängerstecker (202);
(5) elektrisch festes Verdrahten eines zweiten Endes des Aderbündels (402) mit mindestens einem von dem Hilfsbeleuchtungssystem (114) und der Steuerung (600);
(6) elektrisches Verbinden der Steuerung (600) mit mindestens einem von dem Aderbündel (402) und dem Hilfsbeleuchtungssystem (114);
(7) Übertragen eines elektrischen Signals vom Anhängerstecker (202) durch das Aderbündel (402) an das zweite Ende des Aderbündels (402); und
(8) Verwenden der Steuerung (600), um das mindestens eine Hilfsvorderlicht (250) direkt oder indirekt basierend auf dem elektrischen Signal zu betätigen.

9. Verfahren zur Verwendung eines Hilfsbeleuchtungssystems (114) nach Anspruch 8, wobei Schritt (D)(5) folgende Schritte umfasst:
Ausdehnen des Aderbündels (402) von der Rückseite des Fahrzeugs zur Vorderseite des Fahrzeugs; und
Befestigen des Aderbündels (402) an dem Fahrzeug.

10. Verfahren zur Verwendung eines Hilfsbeleuchtungssystems (114) nach Anspruch 8 oder 9, wobei:
das Fahrzeug mindestens ein Rücklicht umfasst; und
Schritt (D)(8) folgenden Schritt umfasst: Betätigen des Hilfsvorderlichts (250) in: einen Ein-Zustand, wenn der Anhängerstecker (202) anzeigt, dass sich das mindestens eine Rücklicht des Fahrzeugs in einem Ein-Zustand befindet; und einen Aus-Zustand, wenn der Anhängerstecker (202) anzeigt, dass sich das mindestens eine Rücklicht des Fahrzeugs in einem Aus-Zustand befindet.

11. Verfahren zur Verwendung eines Hilfsbeleuchtungssystems (114) nach einem der Ansprüche 8-10, wobei:
das Fahrzeug mindestens ein Blinklicht umfasst;
Schritt (B) den Schritt umfasst, das mindestens eine Hilfsvorderlicht (250) bereitzustellen, um ein Hilfsblinklicht (254) zu umfassen; und
Schritt (D)(8) folgenden Schritt umfasst: Betätigen des Hilfsblinklichts (254) in: einen Blinkzustand, wenn der Anhängerstecker (202) anzeigt, dass sich das mindestens eine Blinklicht des Fahrzeugs in einem Blinkzustand befindet; und einen Aus-Zustand, wenn der Anhängerstecker (202) anzeigt, dass sich das mindestens eine Blinklicht des Fahrzeugs in einem Aus-Zustand befindet.

12. Hilfsbeleuchtungssystem (114) zur Verwendung mit einer Hilfsvorrichtung nach einem der Ansprüche 1-7; wobei das Hilfsbeleuchtungssystem (114) umfasst:
mindestens ein Hilfsvorderlicht (250); und
eine Steuerung (600), die einen Mikroprozessor (702) umfasst;
**gekennzeichnet durch**:
ein Aderbündel (402), das: ein erstes Ende aufweist, das elektrisch fest mit dem Anhängerstecker (202) verdrahtet werden kann; ein zweites Ende aufweist, das elektrisch fest mit mindestens einem von dem Hilfsbeleuchtungssystem (114) und der Steuerung (600) verdrahtet werden kann; und ein elektrisches Signal von dem Anhängerstecker (202) zum zweiten Ende überträgt; und,
wobei die Steuerung (600): elektrisch mit mindestens einem von dem Aderbündel (402) und dem Hilfsbeleuchtungssystem (114) verbunden werden kann; und der Mikroprozessor (702) dazu programmiert ist, das mindestens eine Hilfslicht (104) direkt oder indirekt basierend auf dem elektrischen Signal zu betätigen.

13. Hilfsbeleuchtungssystem (114) nach Anspruch 12, wobei:
das Fahrzeug mindestens ein Rücklicht umfasst; und
die Steuerung (600) das Hilfsvorderlicht (250) betätigt in: einen Ein-Zustand, wenn der Anhängerstecker (202) anzeigt, dass sich das mindestens eine Rücklicht des Fahrzeugs in einem Ein-Zustand befindet; und einen Aus-Zustand, wenn der Anhängerstecker (202) anzeigt, dass sich das mindestens eine Rücklicht des Fahrzeugs in einem Aus-Zustand befindet.

14. Hilfsbeleuchtungssystem (114) nach Anspruch 12 oder 13, wobei:
das Fahrzeug mindestens ein Blinklicht umfasst; und
die Steuerung (600) das Hilfsblinklicht (254) betätigt in: einen Blinkzustand, wenn der Anhängerstecker (202) anzeigt, dass sich das mindestens eine Blinklicht des Fahrzeugs in einem Blinkzustand befindet; und einen Aus-Zustand, wenn der Anhängerstecker (202) anzeigt, dass sich das Blinklicht des Fahrzeugs in einem Aus-Zustand befindet.

15. Hilfsbeleuchtungssystem (114) nach einem der Ansprüche 12-14, wobei:
die Steuerung (600) mindestens eines umfasst, von:
- einer Empfangseinheit (900), die das elektrische Signal empfängt;
- mindestens einem Anschluss (602) zur Verwendung beim Verbinden mit dem Hilfsbeleuchtungssystem (114).

## Revendications

1. Appareil auxiliaire pour l'utilisation avec un véhicule ayant un avant, des premier et second côtés, un arrière, et une fiche de remorque (202) positionnée à l'arrière du véhicule, l'appareil auxiliaire comprenant :
un outil auxiliaire (100) qui est montable de façon amovible sur au moins un de :
l'avant du véhicule ; et, au moins un des premier et second côtés du véhicule ;
un système d'éclairage auxiliaire (114) pour l'utilisation avec l'outil auxiliaire (100) incluant au moins un phare auxiliaire (250) ; et,
une unité de commande (600) comprenant un microprocesseur (702) ;
**caractérisé par** :
un faisceau de fils (402) qui : a une première extrémité qui est électriquement connectable de façon câblée à la fiche de remorque (202) ; a une seconde extrémité qui est électriquement connectable de façon câblée à au moins un du système d'éclairage auxiliaire (114) et de l'unité de commande (600) ; et, est capable de transmettre un signal électrique de la fiche de remorque (202) à la seconde extrémité ; et,
dans lequel l'unité de commande (600) : est électriquement connectable à au moins un du faisceau de fils (402) et du système d'éclairage auxiliaire (114) ; et, le microprocesseur (702) est programmé pour mettre en fonctionnement l'au moins un phare auxiliaire (250) sur la base directe ou indirecte du signal électrique.

2. Appareil auxiliaire selon la revendication 1 dans lequel :
le faisceau de fils (402) est fixable au véhicule pour se trouver en longueur depuis l'arrière du véhicule jusqu'à l'avant du véhicule.

3. Appareil auxiliaire selon la revendication 1 ou 2, dans lequel :
le véhicule comprend au moins un feu arrière ; et,
l'unité de commande (600) met en fonctionnement le phare auxiliaire (250) dans :
une condition allumée lorsque la fiche de remorque (202) indique que l'au moins un feu arrière du véhicule est dans une condition allumée ; et, une condition éteinte lorsque la fiche de remorque (202) indique que l'au moins un feu arrière du véhicule est dans une condition éteinte.

4. Appareil auxiliaire selon l'une quelconque des revendications précédentes, dans lequel :
le véhicule comprend au moins un feu clignotant ;
l'au moins un phare auxiliaire (25) est un feu clignotant auxiliaire (254) ; et,
l'unité de commande (600) met en fonctionnement le feu clignotant auxiliaire (254) dans : une condition clignotante lorsque la fiche de remorque (202) indique que l'au moins un feu clignotant du véhicule est dans une condition clignotante ; et, une condition éteinte lorsque la fiche de remorque (202) indique que le feu clignotant du véhicule est dans une condition éteinte.

5. Appareil auxiliaire selon l'une quelconque des revendications précédentes, dans lequel
l'outil auxiliaire (100) est un ensemble chasse-neige.

6. Appareil auxiliaire selon l'une quelconque des revendications précédentes, dans lequel :
la première extrémité du faisceau de fils (402) comprend une fiche auxiliaire (400) qui est électriquement connectable à la fiche de remorque (202), et en particulier, l'appareil auxiliaire comprend :
un adaptateur à queue de cochon (500) qui est électriquement connectable à la fiche de remorque (202) et qui a des première et seconde prises (502, 504) ; et,
dans lequel au moins une des première et seconde prises (502, 504) est électriquement connectable à la fiche auxiliaire (400).

7. Appareil auxiliaire selon l'une quelconque des revendications précédentes, dans lequel l'unité de commande (600) comprend au moins un de :
- une unité de réception (900) qui reçoit le signal électrique ;
- au moins un port (602) pour l'utilisation dans la connexion au système d'éclairage auxiliaire (114).

8. Procédé d'utilisation d'un système d'éclairage auxiliaire (114) avec un véhicule ayant un avant, des premier et second côtés, un arrière, et une fiche de remorque (202) positionnée à l'arrière du véhicule, le procédé comprenant les étapes de :
(A) la fourniture d'un outil auxiliaire (100) ;
(B) la fourniture d'un système d'éclairage auxiliaire (114) pour l'utilisation avec l'outil auxiliaire (100) qui inclut au moins un phare auxiliaire (250) ; et,
(C) la fourniture d'une unité de commande (600) comprenant un microprocesseur (702) ; **caractérisé par** :
(D) la conception de l'outil auxiliaire (100), d'un faisceau de fils (402), et de l'unité de commande (600) pour être utilisables selon les étapes suivantes :
(1) le montage de l'outil auxiliaire (100) sur au moins un de : (a) l'avant du véhicule ; et, (b) au moins un des côtés du véhicule ;
(2) le montage du système d'éclairage auxiliaire (114) sur au moins un du véhicule et de l'outil auxiliaire (100) ;
(3) le montage de l'unité de commande (600) sur au moins un de : (a) l'avant du véhicule ; (b) au moins un des côtés du véhicule ; (c) l'outil auxiliaire (100) ; et, (d) le système d'éclairage auxiliaire (114) ;
(4) la connexion électrique câblée d'une première extrémité du faisceau de fils (402) à la fiche de remorque (202) ;
(5) la connexion électrique câblée d'une seconde extrémité du faisceau de fils (402) à au moins un du système d'éclairage auxiliaire (114) et de l'unité de commande (600) ;
(6) la connexion électrique de l'unité de commande (600) à au moins un du faisceau de fils (402) et du système d'éclairage auxiliaire (114) ;
(7) la transmission d'un signal électrique de la fiche de remorque (202), par l'intermédiaire du faisceau de fils (402), à la seconde extrémité le faisceau de fils (402) ; et,
(8) l'utilisation de l'unité de commande (600) pour mettre en fonctionnement l'au moins un phare auxiliaire (250) sur la base directe ou indirecte du signal électrique.

9. Procédé d'utilisation d'un système d'éclairage auxiliaire (114) selon la revendication 8, dans lequel l'étape (D)(5) comprend les étapes de :
l'extension du faisceau de fils (402) depuis l'arrière du véhicule jusqu'à l'avant du véhicule ; et,
la fixation du faisceau de fils (402) au véhicule.

10. Procédé d'utilisation d'un système d'éclairage auxiliaire (114) selon la revendication 8 ou 9, dans lequel :
le véhicule comprend au moins un feu arrière ; et,
l'étape (D)(8) comprend l'étape de : la mise en fonctionnement du phare auxiliaire (250) dans : une condition allumée lorsque la fiche de remorque (202) indique que l'au moins un feu arrière du véhicule est dans une condition allumée ; et, une condition éteinte lorsque la fiche de remorque (202) indique que l'au moins un feu arrière du véhicule est dans une condition éteinte.

11. Procédé d'utilisation d'un système d'éclairage auxiliaire (114) selon l'une quelconque des revendications 8 à 10, dans lequel :
le véhicule comprend au moins un feu clignotant ;
l'étape (B) comprend l'étape de la fourniture de l'au moins un phare auxiliaire (250) pour comprendre un feu clignotant auxiliaire (254) ; et,
l'étape (D)(8) comprend l'étape de : la mise en fonctionnement du feu clignotant auxiliaire (254) dans : une condition clignotante lorsque la fiche de remorque (202) indique que l'au moins un feu clignotant du véhicule est dans une condition clignotante ; et, une condition éteinte lorsque la fiche de remorque (202) indique que l'au moins un feu clignotant du véhicule est dans une condition éteinte.

12. Système d'éclairage auxiliaire (114) pour l'utilisation avec un appareil auxiliaire selon l'une quelconque des revendications 1 à 7 ; le système d'éclairage auxiliaire (114) comprenant :
au moins un phare auxiliaire (250) ; et,
une unité de commande (600) comprenant un microprocesseur (702) ;
**caractérisé par** :
un faisceau de fils (402) qui : a une première extrémité qui est électriquement connectable de façon câblée à la fiche de remorque (202) ; a une seconde extrémité qui est électriquement connectable de façon câblée à au moins un du système d'éclairage auxiliaire (114) et de l'unité de commande (600) ; et, transmet un signal électrique de la fiche de remorque (202) à la seconde extrémité ; et,
dans lequel l'unité de commande (600) : est électriquement connectable à au moins un du faisceau de fils (402) et du système d'éclairage auxiliaire (114) ; et, le microprocesseur (702) est programmé pour mettre en fonctionnement l'au moins une lumière auxiliaire (104) sur la base directe ou indirecte du signal électrique.

13. Système d'éclairage auxiliaire (114) selon la revendication 12 dans lequel :
le véhicule comprend au moins un feu arrière ; et,
l'unité de commande (600) met en fonctionnement le phare auxiliaire (250) dans :
une condition allumée lorsque la fiche de remorque (202) indique que l'au moins un feu arrière du véhicule est dans une condition allumée ; et, une condition éteinte lorsque la fiche de remorque (202) indique que l'au moins un feu arrière du véhicule est dans une condition éteinte.

14. Système d'éclairage auxiliaire (114) selon la revendication 12 ou 13, dans lequel :
le véhicule comprend au moins un feu clignotant ; et,
l'unité de commande (600) met en fonctionnement le feu clignotant auxiliaire (254) dans : une condition clignotante lorsque la fiche de remorque (202) indique que l'au moins un feu clignotant du véhicule est dans une condition clignotante ; et, une condition éteinte lorsque la fiche de remorque (202) indique que le feu clignotant du véhicule est dans une condition éteinte.

15. Système d'éclairage auxiliaire (114) selon l'une quelconque des revendications 12 à 14, dans lequel :
l'unité de commande (600) comprend au moins un de :
- une unité de réception (900) qui reçoit le signal électrique ;
- au moins un port (602) pour l'utilisation dans la connexion au système d'éclairage auxiliaire (114).
